# EUROPÄISCHE PATENTSCHRIFT

(11) **EP 3 763 686 B1**
(45) Veröffentlichungstag und Bekanntmachung des Hinweises auf die Patenterteilung: **30.08.2023**
(21) Anmeldenummer: 19184905.8
(22) Anmeldetag: 08.07.2019
(51) Int. Cl.: C03C 17/02, C23D 5/08, C23D 13/02, C04B 41/00

(54) **REPARATUR VON FEHLSTELLEN IN EINEM GLAS ODER GLASKERAMISCHEN ÜBERZUG AUF EINEM METALLISCHEN ODER KERAMISCHEN SUBSTRAT INKLUSIVE DER SUBSTRATOBERFLÄCHE**
REPAIR OF DEFECTS IN A GLASS OR GLASS-CERAMIC COATING ON A METALLIC OR CERAMIC SUBSTRATE INCLUDING SUBSTRATE SURFACE
RÉPARATION DE POINTS DE DÉFAUT DANS UN REVÊTEMENT EN VERRE OU EN VITROCÉRAMIQUE SUR UN SUBSTRAT MÉTALLIQUE OU CÉRAMIQUE, Y COMPRIS LA SURFACE DU SUBSTRAT

(43) Veröffentlichungstag der Anmeldung: 13.01.2021
(73) Patentinhaber: OMERAS GmbH Oberflächenveredelung und Metallverarbeitung, 08315 Lauter-Bernsbach (DE)
(72) Erfinder: Knauf, Oliver, 08280 Aue (DE)
(74) Vertreter: Kailuweit & Uhlemann Patentanwälte Partnerschaft mbB

(56) Entgegenhaltungen:
- WO-A1-2015/055822
- BR-A- 9 700 234

## Beschreibung

Die Erfindung betrifft die Reparatur von mindestens einer Fehlstelle in einem Glas oder glaskeramischen Überzug, wobei das Glas oder der glaskeramische Überzug auf einem metallischen oder keramischen Substrat angeordnet ist sowie die Reparatur von Fehlstellen auf der metallischen oder keramischen Substratoberfläche. Dabei umfasst die Erfindung ein Reparaturverfahren sowie ein Laserreparatursystem zur Behandlung von Fehlstellen in emaillierten Gegenständen.

Als Email oder Emaille wird ein Kompositmaterial aus einem glasartigen anorganischen Werkstoff, auch als glaskeramisches Material bezeichnet, mit einem metallischen Grundmaterial bezeichnet. Das glaskeramische Material entsteht durch vollständiges oder teilweises Schmelzen hauptsächlich oxidischer Rohstoffe und einer chemischen Verbindung mit dem metallischen Grundmaterial und bildet einen glaskeramischen Überzug, welcher auch als Emailschicht bezeichnet wird. Die so hergestellte anorganische Zubereitung wird mit Zusätzen in einer oder mehreren Schichten als Überzug auf metallische Substrate aufgetragen und bei Temperaturen über 800°C aufgeschmolzen.

Die Eigenschaften des Emails sind dabei auf das entsprechend verwendete Substrat und den jeweiligen Verwendungszweck abzustimmen. Prinzipiell weisen Emails eine hohe Resistenz gegenüber Korrosion, einen hohen Verschleißwiderstand, chemische Neutralität, ein hygienisches sowie biologisch und katalytisch inertes Verhalten, isolierende Eigenschaften sowie glatte Oberflächen auf. Mithin dienen die Emails als Schutzüberzug für die Substrate. Weiterhin sind Emails leicht zu reinigen, kratzfest und formstabil. Vorteilhaft finden emaillierte Gegenstände wie emaillierte Bleche daher Anwendung als Verkleidungen von Räumen oder als Paneele in Tunneln oder U-Bahnen. Beispielsweise sind Großbehälter, Speicher, Rohre, Schilder, Industrieteile, Verbrauchsgüter, Kochgefäße und Apparate emailliert. Im Folgenden werden metallische oder keramische Substrate mit einem glaskeramischen Überzug bzw. einer Emailschicht als emaillierte Gegenstände bezeichnet.

Im Folgenden wird ein typisches Verfahren zur Herstellung emaillierter Substrate mittels Nassvermahlung beschrieben.

Bei der Emailleherstellung werden die Bestandteile des Grundemails und/oder des Deckemails fein gemahlen und anschließend in einem Stand- oder Durchlaufofen homogen aufgeschmolzen Anschließend wird die Schmelze thermisch abgeschreckt. Das Abschrecken erfolgt entweder trocken oder nass wie bspw. in Wasser. Durch das Abschrecken entsteht die sogenannte Fritte, welche auch als Glasfritte bezeichnet wird und glasartige Eigenschaften aufweist.

Emaille-Rezepturen, aufweisend eine oder mehreren Fritten, als Farboxide ausgebildete Farbkörper sowie weiteren Zusätzen wie Ton, Quarz und/oder Stellmittel werden anschließend unter Zugabe eines Lösungsmittels in einer Kugel- oder Planetenmühle zu Pulver fein gemahlen. Bei der Nassvermahlung kommt als Lösungsmittel meist Wasser oder ein organisches Lösungsmittel zum Einsatz. Die bei der Nassvermahlung erhaltene Suspension von Emailpulver in Lösungsmittel liegt als Emailschlicker vor und wird im Folgenden auch als Schlicker bzw. Beschichtungsmaterial bezeichnet Die Suspension kann, je nach in der Zusammensetzung enthaltenen Fritten, Farboxiden und Zusätzen verschiedene Farben, Glanzgrade und Eigenschaften aufweisen.

Der Emailschlicker kann verschiedene Viskositäten aufweisen und kann entsprechend flüssig oder pastös (pastenförmiger Emailschlicker) ausgebildet sein. Je nach Zusammensetzung handelt es sich um einen Grundemailschlicker oder einen Deckemailschlicker. Alternativ kann auch das durch Trockenvermahlung gewonnene trockene Emailpulver als Pulveremaille für die weitere Herstellung verwendet werden.

Nachdem eine optionale Substratvorbehandlung durch diverse Schritte wie mechanische und/oder chemische Reinigungsverfahren und/oder Trocknung und/oder Entfetten und/oder Vorerwärmung erfolgte, wird anschließend auf das Substrat der Grundemailschlicker möglichst gleichmäßig durch ein Beschichtungsverfahren aufgetragen. Dieser muss vollständig getrocknet sein, bevor sich daran das Einbrennen des Grundemailschlickers zu mindestens einer Grundemailschicht anschließt. Je nach Werkstoff des Substrates erfolgt das Einbrennen bei einer entsprechend geeigneten Temperatur. So sind bspw. die Temperaturen für ein Aluminiumsubstrat niedriger als für ein Stahlsubstrat. Dabei schmilzt die mindestens eine Grundemailschicht zu einem glasartigen Überzug zusammen. Der Grundemailschlicker wird durch Tauchen oder Spritzen auf ein Substrat aufgebracht und, im Falle von Stahl- oder Edelstahlsubstraten, bei ca. 800°C bis 900°C bzw. im Falle von Aluminiumsubstraten bei ca. 450°C bis 550°C zu einer Grundemailschicht, welche verfahrensabhängig eine Dicke von ca. 80 µm bis 250 µm aufweist, eingebrannt.

Anschließend erfolgt das möglichst gleichmäßige Auftragen des Deckemailschlickers durch ein Beschichtungsverfahren mit anschließender vollständigen Trocknung und dem nachfolgenden Einbrennen des Deckemailschlickers zu mindestens einer Deckemailschicht von ca. 100 µm Dicke. Meistens überziehen mehrere Deckemailschichten das darunterliegende Substrat bzw. die darunterliegende Grundemailschicht. In einer Ausführungsform wird der Deckemailschlicker durch Tauchen oder Spritzen auf das Grundemail aufgebracht und bei 800°C bis 850°C eingebrannt. Die Gesamtschichtdicke der Deckemailschicht liegt im Bereich von 0 bis 1 mm, bevorzugt von 0,05 mm bis 0,5 mm.

Während der Herstellung emaillierter Gegenstände, aber auch bei der Montage oder durch Fehler im Gebrauch derselben kann es häufig zur Bildung von Defekten in Emailschichten und/oder den darunterliegenden Substraten kommen.

Der Emaillierprozess selbst wird durch unzählige Parameter beeinflusst. So haben bspw. die verwendeten Substrat-Werkstoffe, die Temperaturen und Ofenatmosphäre, die im Wasser gelöste Stoffe oder die Zusammensetzung und Korngröße des Emailpulvers oder Emailschlickers selbst großen Einfluss auf die Herstellung emaillierter Gegenstände. Dabei auftretende Fehlstellen beruhen auf Mängeln in der Mikrostruktur. Bei diesen Fehlstellen handelt es sich um Poren, Blasen, Risse oder Nadelstiche, welche auf chemisch/physikalisch bedingte Ausgasungsprozesse zurück zu führen sind. Die Ausgasungen stammen meist aus den Substraten. Bei den austretenden Gasen handelt es sich größtenteils um Kohlenstoffoxide und Wasserstoffe, welche aufgrund des Einbrennprozesses auf dem Substrat austreten, jedoch von den darüber befindlichen diffusionsdichteren Emailschichten blockiert und aufgenommen werden und es folglich zur punktuell oder flächig ausgebildeten Fehlstellen durch Druckspannungen insbesondere an den Grenzflächen kommt.

Weiterhin können auch mechanische Eigenschaften aufgrund mangelnder Bindungsstärke bzw. Haftfähigkeit des Emails hinsichtlich Härte, Abrieb oder Bruchzähigkeit gestört sein, wodurch es zur Ausbildung von Spannungslinien kommt.

Die Fehlstellen in den Emailschichten können durch nachträgliche Zerstörung der Beschichtung im Bereich herstellungsbedingter Fehlstellen entstehen (z.B. durch Aufbrechen vorher geschlossener Blasen oder Poren oder durch Montagefehler wie Schlagstellen oder Funkenflug) oder durch die Benutzung der emaillierten Gegenstände für ihre jeweilige Funktion hervorgerufen werden. Die Fehlstellen in Tunnel- oder U-Bahn-Paneelen können weiterhin bspw. durch Steinschläge hervorgerufen werden. Dabei platzt mindestens eine oberflächennahe Emailschicht ab. Auch durch Montagefehler, welche z.B. durch Schleifarbeiten an emaillierten Gegenständen, können an diesen Korrosionserscheinungen hervorgerufen werden, welche häufig durch entsprechende klimatische Bedingungen begünstigt werden.

Die Fehlstellen weisen üblicherweise Durchmesser von bis zu 20 mm, meistens im Bereich von 0,3 mm bis 5 mm auf. Die Tiefe der Fehlstellen reicht bis zu 1 mm, häufig jedoch sind die Fehlstellen zwischen 0,05 mm und 0,5 mm tief.

Diese Fehlstellen treten zwar meist vereinzelt und verstreut auf, bilden jedoch Angriffspunkte für Korrosionserscheinungen und sind auch in ästhetischer Hinsicht nachteilig. Insbesondere im Einsatzbereich Tankbau ist ein kompletter Anlagenausfall bzw. Stillstand durch einen Korrosionsdefekt einer dieser Fehlstellen möglich und stellt daher ein hohes wirtschaftliches bzw. hygienisches Risiko dar.

Aus dem Stand der Technik sind bereits Reparaturverfahren für Fehlstellen in Emailschichten bekannt. Häufig werden die mit Fehlstellen versehenen Teile ausgetauscht und durch neue, defektfreie Teile ersetzt oder extern neu beschichtet bzw. repariert. Häufig werden auch Dichtmittel, Platten oder Flicken auf die Fehlstellen aufgebracht oder die Fehlstellen durch Zuschmieren repariert.

Die EP 2 269 766 A1 beschreibt ein Reparaturverfahren zur Instandsetzung beschädigter emaillierter Behälter oder Behälterbestandteile. Das Verfahren setzt eine mit einem Tantalblech umhüllte Stahlplatte ein, die auf eine schadhafte Stelle aufgebracht wird und diese abdeckt. Dabei wird diese Abdeckung ihrerseits gegenüber der emaillierten Wandung des Behälters mit einem Dichtelement aus Polytetrafluorethylen (PTFE) abgedeckt bzw. abgedichtet.

Die DE 1 947 983 A beschreibt ein Verfahren zum Behandeln eines Metallgegenstandes, der eine Oberflächenbeschichtung aus Emaille aufweist, welche vorgebrannt ist, um dann eine elektrophoretische Reparaturbeschichtung von beschädigten Stellen der Oberfläche durch den Niederschlag geeigneter polymerer Überzugswerkstoffe aus einer wässrigen Dispersion erfolgt.

In der EP 0 407 027 B1 wird ein Verfahren zum Reparieren eines beschädigten Bereiches einer Einrichtung aus emailliertem Stahl offenbart. Dabei wird ein Reparaturmittel, welches chemische Verbindungen wie Metallalkoxide umfasst, auf den beschädigten Bereich aufgetragen, erhitzt und durch ein Sol-Gel-Verfahren zu Glas erstarrt.

Die DE 3437620 A1 offenbart ein Verfahren zum Ausbessern einer Fehlstelle in einer Emailschicht. Die Ausbesserung dieser als Emailporen ausgebildeten Fehlstellen erfolgt, indem ein komplementär zur Fehlstelle zugeschliffenes Scheibchen aus Email in diese eingedrückt wird. Dieses Scheibchen wird dann in einem weiteren Brand fixiert, wobei im Bereich der Umrandung des Scheibchens vor Durchführung des Einbrennvorgangs Emailschlicker aufgetragen wird. Der erforderliche weitere Brand zur festen Fixierung des Reparatur-Emailscheibchens macht dieses Verfahren jedoch für eine mobile Reparatur vor Ort ungeeignet.

In der DE 1 696 626 B wird ein Verfahren zum Ausbessern fehlerhafter Emailschichten auf gusseisernen Wannen beschrieben. Dabei können nun beim Emaillieren aufgetretene Fehler wie Poren, Blasen und Nadelstiche auch im Nachgang, bei abgekühlter Emaille, beseitigt werden, ohne ein erneutes Erhitzen und evtl. damit einhergehendes Beschädigen der Wanne durch Risse, Blasen oder Poren durchzuführen. Die Wannen werden nach dem Abkühlen an den fehlerhaften Stellen bearbeitet, vollständig oder teilweise mit einer neuen Emailschicht versehen und glattgebrannt. Die Reparatur umfasst dabei eine Ausbohrung der Fehlstellen, das Aufbringen einer Emaillesuspension auf die auszubessernden Stellen bzw. das Aufstreuen von Emailpulver auf die auszubesserenden vorerhitzten Stellen sowie ein anschließendes Glattbrennen der Reparaturschicht. Zur Reparatur wird dabei die gleiche Emaille wie für die ursprüngliche Deckschicht angewendet. Da entweder die gesamte Wanne oder nur der Teil der Wanne erneut erwärmt wird, auf welchen die neue Emailschicht aufgebracht wurde, handelt es sich hierbei um eine großflächige, ungenaue und aufwändige Prozedur, bei der auch fehlerfreie Stellen aufgeschmolzen werden.

Die DE 40 21 466 A1 offenbart ein Verfahren zur Regenration von kleineren Schadstellen an der Emailschicht in emaillierten Stahltanks. Dabei werden die Schadstelle und die angrenzenden Bereiche mit einem Strahlmittel, insbesondere Korund, bestrahlt und aufgeraut, um eine bessere Haftung zu erhalten. Die so behandelten Schadstellen werden mit einer metallischen Deckschicht (und somit nicht des Original-Materials) mittels eines thermischen Spritzverfahrens beschichtet, wobei die Oberfläche der Emailschicht dabei nicht angeschmolzen wird. Als Energieträger für die Aufschmelzung des Spritzzusatzwerkstoffes kommen bspw. Tiegelspritz-, Flamm-, Lichtbogen-, Detonations- oder Plasmaverfahren in Frage. Anschließend werden die Poren dieser mikroporösen Deckschicht durch mechanische Bearbeitung oder Porenversiegler versiegelt. Auch hier handelt es sich insbesondere aufgrund des Aufschmelzens um ein aufwändiges Reparaturverfahren.

Weiterhin sind induktionsbasierte Reparaturverfahren bekannt. In der WO 2015/055822 A1 wird u.a. die Reparatur eines vollständig oder teilweise emaillierten Bauteiles offenbart, welche direkt am Einbauort, d.h. ohne Aus- und Wiedereinbauen, erfolgen kann. Dabei werden die zu behandelnden Schadstellen in der Emaile von Industrieteilen oder Gebrauchsgütern mechanisch und/oder chemisch gereinigt und von Verschmutzungen befreit. Anschließend wird eine Emailmasse auf die zu reparierende Stelle aufgetragen und induktiv sowie schnell aufgeschmolzen und sofort lokal eingebrannt. Der Induktor kann dabei als tragbares Handgerät ausgeführt sein und wird manuell über die Oberfläche des Werkstücks bewegt. Die Größe des Induktors ist dabei flexibel an die jeweilige zu behandelnde Stelle anpassbar ausgebildet. Allerdings erfolgt dort keine thermische Vorbehandlung der Fehlstellen bspw. durch einen Laser, sondern rein mechanisch oder chemisch. Weiterhin erfolgt das Emaillieren auf Induktionsbasis und nicht unter Einsatz eines Lasers. Nachteilig kann durch die Betriebsweise des Induktors durch die im Substrat erzeugten Wirbelstromverluste das Verfahren nicht individuell auf jede Material- und Farbzusammensetzung der Emaile angepasst werden. Vielmehr wird aufgrund der immer wieder unterschiedlichen Zusammensetzungen des Materials ausgehend vom Substrat jeweils relativ unkontrolliert in die darauf angeordneten Emailschichten geheizt.

Die BR 9 700 234 A offenbart ein Verfahren zur Reparatur von Schäden in einer Emaille-Oberfläche, wobei Beschichtungsmaterials auf mindestens eine Fehlstelle aufgebracht und durch einen fokussierten Wärmeeintrag mittels Laserbestrahlung eingebrannt wird.

Weiterhin weisen die Reparaturverfahren erhebliche Mängel hinsichtlich auftretender Energieverluste auf, da der Energieeintrag bei stärkeren Wanddicken der Substrate nicht ausreichend ist und es zu einer Wärmeabwanderung im Substrat und den darüberliegenden

Emailschichten kommt. Eine Fokussierung des Wärmestrahls auf eine spezifische Stelle ist nicht möglich, wodurch aus Gründen der Kontrollierbarkeit nur dünnere Wanddicken für dieses Reparaturverfahren in Betracht kommen. Bei zu niedrigen Wanddicken der Substrate ist eine örtliche Überhitzung des Substrates wahrscheinlich, was sowohl zum Bauteilverzug als auch zu Spannungsrissen führt. Auf der anderen Seite ist bei höheren Wanddicken ein hoher Anschlusswert der Induktorquellen erforderlich, was sich wiederum nachteilig auf den Arbeitsschutz hinsichtlich der Wechselwirkung des Magnetfeldes mit Personen, welche bspw. einen Herzschrittmacher tragen, auswirkt, wodurch eine einfache Anwendung des Reparaturverfahrens problematisch wird. Überdies sind, im Falle von höheren Wanddicken, auch die dafür benötigten hohen Anschlusswerte nicht für einen mobilen Reparatureinsatz geeignet.

Es wäre daher in hohem Maße wünschenswert, ein Reparaturverfahren zur Verfügung zu stellen, welches so ausgestaltet ist, dass es direkt vor Ort erfolgen und auf das jeweilige Material individuell eingestellt werden kann. Weiterhin soll auf eine großflächige und aufwändige Erwärmung der behandelten Stelle verzichtet werden und auch emaillierte Gegenstände mit höheren Wanddicken repariert werden können. Zudem soll ein mobiler Einsatz des Reparaturverfahrens gewährleistet werden.

Aufgabe ist es, ein Reparaturverfahren bereitzustellen, welches die Nachteile des Standes der Technik überwindet.

Dabei sollen Fehlstellen auch dickeren Emailschichten sowie den darunter angeordneten Substraten lokal, direkt, zeitsparend, effizient und ohne energetische Verluste ausgebessert werden. Rissbildungen und Spannungslinien sollen vermieden werden, stattdessen soll ein homogener Gesamteindruck der reparierten Fehlstellen ermöglicht werden.

Weiterhin soll das Reparaturverfahren durch eine dafür vorgesehene transportable und kompakte Vorrichtung realisiert werden.

Erfindungsgemäß wird die Aufgabe durch eine Reparatur von mindestens einer Fehlstelle in einem Glas oder glaskeramischen Überzug nach Anspruch 1 gelöst, wobei das Glas oder der glaskeramische Überzug auf einem metallischen oder keramischen Substrat angeordnet ist. Weiterhin wird die Aufgabe erfindungsgemäß durch die Reparatur von Fehlstellen auf der metallischen oder keramischen Substratoberfläche gelöst. Vorteilhafte Ausgestaltungen der Erfindung sind in den abhängigen Ansprüchen angegeben.

Ein erster Aspekt der Erfindung betrifft ein Verfahren zur Reparatur mindestens einer Fehlstelle in einem Glas oder glaskeramischen Überzug auf einem metallischen oder keramischen Substrat inklusive der Substratoberfläche, wobei das erfindungsgemäße Verfahren folgende Verfahrensschritte umfasst: Das Aufbringen von Beschichtungsmaterial auf die mindestens eine Fehlstelle durch ein Beschichtungsverfahren, die Entfernung von überstehenden überschüssigen Beschichtungsmaterial, die Trocknung des aufgetragenen Beschichtungsmaterials sowie das Einbrennen des aufgebrachten Beschichtungsmaterials unter Wärmeeintrag. Dabei weist das Einbrennen folgende Schritte auf: Einen ersten fokussierten hochenergetischen Wärmeeintrag durch Laserbestrahlung mit einer verbundenen Aufschmelzung des Bestrahlungsflecks und einen sich anschließenden zweiten defokussierten niederenergetischen Wärmeeintrag mit einer kontrollierten kontinuierlichen Abkühlung des Bestrahlungsflecks.

Ein weiterer Aspekt der Erfindung betrifft ein Laserreparatursystem zur Reparatur von Fehlstellen in einem Glas oder glaskeramischen Überzug auf einem metallischen oder keramischen Substrat inklusive der Substratoberfläche, wobei das erfindungsgemäße Laserreparatursystem mindestens eine austauschbare Schwenkvorrichtung, eine austauschbare Wärmebestrahlungsvorrichtung und eine Energieversorgungseinheit umfasst. Dabei ist das Laserreparatursystem auf der Emailschicht lösbar angeordnet und die Wärmebestrahlungsvorrichtung ist beweglich und lösbar ausgebildet an der Schwenkvorrichtung angeordnet. Weiterhin umfasst die Wärmebestrahlungsvorrichtung mindestens einen austauschbaren Laserbearbeitungskopf und mindestens einen austauschbaren Laser. Die Schwenkvorrichtung weist mindestens zwei Positionen für eine Positionierung der Wärmebestrahlungsvorrichtung auf, wobei eine erste Position einer Ruheposition und eine zweite Position einer Bearbeitungsposition über der Fehlstelle entspricht.

In einer Ausführungsform kommen als Substrate, welche auch als Trägerwerkstoffe bezeichnet werden, metallische oder keramische Substrate zum Einsatz. In einer weiteren Ausführungsform kommen als Substrate emaillierfähige Metalle, metallische Legierungen oder Bleche wie z.B. Aluminium-Legierungen, Magnesium-Legierungen, kohlenstoffarme Stahlbleche, Kupfer, Gold, Silber, Platin, Edelstähle, Gusseisen oder Gläser zum Einsatz. In einer Ausführungsform umfassen die auf die Substrate als horizontale Lagen aufgebrachten Emailschichten mindestens eine Grundemailschicht, welche in direktem Kontakt mit dem Substrat ist, und mindestens eine Deckemailschicht, welche auf dem Grundemail aufgebracht ist. In einer Ausführungsform weisen emaillierte Gegenstände eine Vielzahl von Emailschichten auf. Das Grundemail dient aufgrund von darin enthaltenen Haftoxiden der Haftung der Emailschicht auf der Substratoberfläche. In einer Ausführungsform, unter gewissen Voraussetzungen, bspw. wenn das Substrat zuvor vernickelt wird, kann das Grundemail direkt als sogenanntes Direktemail verwendet werden.

Erfindungsgemäß wird unter der Oberfläche des emaillierten Gegenstandes die äußerste Deckemailschicht verstanden. Die Grundemailschicht wird im Folgenden auch als Grundemail bezeichnet, die Deckemailschicht wird im Folgenden auch als Deckemail bezeichnet.

In einer Ausführungsform umfasst eine typische Zusammensetzung für ein Grundemail 34% Borax, 28% Feldspat, 5% Fluorit, 20% Quarz, 6% Soda, 5% Natriumnitrat, und jeweils 0,5 bis 1,5% Kobalt, Mangan und Nickeloxid.

In einer Ausführungsform umfasst eine typische Zusammensetzung für ein Deckemail 23% Borax, 52% Feldspat, 5% Fluorit, 5% Quarz, 5% Soda, 25% Natriumnitrat, jeweils 0,5 bis 1,5% Kobalt, Mangan und Nickeloxid sowie 6,5% Kryolith. In einer weiteren Ausführungsform kommen im späteren Herstellungsprozess noch ca. 6 bis 10% Trübungsmittel wie Zinnoxid, Titansilikate und Antimontrioxid sowie Farboxide hinzu.

Im Sinne der Erfindung werden die Fehlstellen auch als Defekte, defekte Stellen, Fehler oder zu behandelnde Stellen bezeichnet. Die Fehlstellen können an der Oberfläche des emaillierten Gegenstandes (meist im Deckemail), in den Emailschichten des Grund- und/oder Deckemails und/oder sogar zumindest bis zur Substratoberfläche auf- oder durchtreten. Weiterhin können Korrosionserscheinungen im Substrat oder auf der Substratoberfläche als Fehlstellen auftreten. Im Gegensatz dazu werden die Bereiche des emaillierten Gegenstandes, in welchen keine Fehlstellen vorliegen, als intakt bezeichnet.

Im Folgenden wird das erfindungsgemäße Reparaturverfahren für einen Durchlauf beschrieben. Dabei folgen die einzelnen Verfahrensschritte unmittelbar aufeinander.

In einer bevorzugten Ausführungsform weist das Reparaturverfahren mindestens einen Durchlauf auf, wobei ein Durchlauf das Aufbringen von Beschichtungsmaterial (im Folgenden auch Beschichtung genannt) auf die mindestens eine Fehlstelle sowie das sich anschließende Einbrennen durch einen Laser (im Folgenden auch Bestrahlung genannt) aufweist. Die anderen Schritte zur Vor- bzw. Nachbehandlung sind nicht notwendigerweise nötig. In einer weiteren Ausführungsform ist eine Kombination bzw. mehrmalige Ausführung der Schritte hintereinander möglich, um den bestmöglichen Erfolg der Reparatur herbeizuführen.

In einer Ausführungsform erfolgt eine Detektion der mindestens einen Fehlstelle bevor das erfindungsgemäße Reparaturverfahren angewandt wird. Durch diese Prüfung können Fehlstellen sowie die Oberflächengüte der Emailschicht erkannt werden. Vorteilhaft wird dadurch bereits das Ausmaß der sich anschließenden Behandlung erkennbar sowie die Lage der Fehlstellen auf den emaillierten Gegenständen, sodass die erfindungsgemäße Reparatur zügig und gezielt erfolgen kann.

Häufig sind die Fehlstellen in Emailschichten oder den darunterliegenden Substraten je nach Lichteinfall bereits mit bloßem Auge erkennbar. In einer bevorzugten Ausführungsform erfolgt die Detektion von mindestens einer Fehlstelle mittels einer optischen und/oder elektrischen Prüfung. In einer bevorzugten Ausführungsform umfasst die optische Prüfung eine visuelle Durchsicht. In einer bevorzugten Ausführungsform umfasst die elektrische Prüfung eine Hochspannungsprüfung gemäß der DIN Norm DIN EN 14430. In einer Ausführungsform wird die Hochspannungsprüfung gemäß der DIN Norm DIN EN 14430 bei 20 kV Gleichstrom durchgeführt. In einer alternativen Ausführungsform umfasst die elektrische Prüfung eine Niedrigspannungsprüfung gemäß der DIN Norm DIN EN ISO 8289.

In einer bevorzugten Ausführungsform wird die Detektion mindestens einer Fehlstelle vor dem Auftragen des Beschichtungsmaterials mit anschließendem Einbrennen und/oder nach dem Auftragen des Beschichtungsmaterials mit anschließendem Einbrennen zur Kontrolle durchgeführt.

In einer bevorzugten Ausführungsform erfolgt eine mechanische und/oder chemische und/oder thermische Vorbehandlung der mindestens einen Fehlstelle. Vorteilhaft werden dadurch insbesondere Verunreinigungen auf der Oberfläche der mindestens einen Fehlstelle entfernt. Dabei kann auch der die jeweilige Fehlstelle umgebende intakte Bereich gereinigt werden. Vorteilhaft wird durch die mechanische und/oder chemische Vorbehandlung die Fehlstelle von Verschmutzungen befreit.

In einer Ausführungsform umfasst die mechanische Vorbehandlung Schleifen und/oder Fräsen, wodurch auch oberflächenferne Bereiche der Fehlstelle zugänglich gemacht werden, was insbesondere bei tiefer liegenden Defekten, welche auch im Substrat vorliegen können, vorteilhaft ist. In einer Ausführungsform umfasst die chemische Vorbehandlung das lokale Ätzen und/oder eine Entfettung der Fehlstelle. Weiterhin umfasst die Vorbehandlung eine anschließende Trocknung der Fehlstelle.

In einer weiteren Ausführungsform umfasst die Vorbehandlung der mindestens einen Fehlstelle eine thermische Vorbehandlung, in welcher eine Vorerwärmung stattfindet. In einer Ausführungsform findet die Vorerwärmung des emaillierten Gegenstandes bei konstant gehaltenen Temperaturen statt, bevorzugt zwischen 20°C und 30°C. In einer Ausführungsform werden durch die thermische Vorbehandlung Verunreinigungen wie Oberflächenpartikel gezielt verdampft. In einer Ausführungsform wird die thermische Vorbehandlung durch einen thermischen Laserprozess mittels eines Laserstrahls realisiert. Vorteilhaft wird dadurch eine definierte Oberflächenstruktur der mindestens einen Fehlstelle erzeugt. Weiterhin vorteilhaft wird durch den thermischen Laserprozess gezielt eine homogene Ausgangsbasis der mindestens einen Fehlstelle hergestellt. Hierzu wird in einer Ausführungsform die Fehlstelle auf einen homogenen Standard definiert, wobei Verschmutzungen und/oder Reaktionsprodukte am Grund der Fehlstelle eliminiert werden. In einer Ausführungsform wird für die thermische Vorbehandlung mittels Laser eine geringere Leistungsdichte als für das sich anschließende Reparaturverfahren verwendet. Dabei erfolgt die Wärmebehandlung am emaillierten Gegenstand ausgehend von

In einer Ausführungsform erfolgt ein Verfüllen (im Folgenden auch Beschichtung genannt) der mindestens einen Fehlstelle mit Beschichtungsmaterial. Erfindungsgemäß dient fein vermahlenes Emailpulver oder Emailschlicker als Beschichtungsmaterial, welches in die Fehlstelle eingebracht bzw. auf die Fehlstelle aufgetragen wird. In einer bevorzugten Ausführungsform weist das Beschichtungsmaterial die gleiche Zusammensetzung und die gleichen Eigenschaften wie das intakte Material des emaillierten Gegenstandes auf. In einer Ausführungsform weist das Beschichtungsmaterial die gleiche Zusammensetzung und die gleichen Eigenschaften wie die mindestens eine intakte Deckemailschicht und/oder die mindestens eine intakte Grundemailschicht auf. In einer alternativen Ausführungsform weist das Beschichtungsmaterial eine vom intakten Material des emaillierten Gegenstandes abweichende Zusammensetzung und abweichende Eigenschaften auf. In einer weiteren Ausführungsform weist das Beschichtungsmaterial die gleiche Zusammensetzung und die gleichen Eigenschaften oder abweichende Zusammensetzung und abweichende Eigenschaften wie das darunterliegende Substrat auf.

In einer Ausführungsform wird das Beschichtungsmaterial durch ein Beschichtungsverfahren auf die mindestens eine Fehlstelle aufgebracht. In einer bevorzugten Ausführungsform ist das Beschichtungsverfahren ausgewählt aus einem Spritzverfahren, einem Streichverfahren, einem Rakelverfahren, einem Gießverfahren, einem Flutverfahren, einem Tauchverfahren, einem Siebdruckverfahren und/oder einem Sprühverfahren. In einer Ausführungsform wird das Beschichtungsverfahren je nach Zugänglichkeit des zu behandelnden emaillierten Gegenstandes gewählt. So erfolgt zum Beispiel das Spritzen bei gut zugänglichen emaillierten Flächen, wohingegen das Gießen bei schlecht zugänglichen emaillierten Hohlräumen erfolgt.

In einer Ausführungsform wird das Beschichtungsmaterial über ein Beschichtungssystem auf die zu reparierende Fehlstelle aufgetragen.

Erfindungsgemäß wird überschüssiges Beschichtungsmaterial, welches sich an der Oberfläche des emaillierten Gegenstandes befindet, entfernt. Dabei erfolgt die Entfernung von überschüssigem Beschichtungsmaterial mechanisch bspw. durch Abziehen mit einem Gegenstand wie einer Rakel oder einer Klinge. Erfindungsgemäß wird anschließend die mit Beschichtungsmaterial versehene Fehlstelle getrocknet. Dies erfolgt an der Luft oder unter Wärmezufuhr.

In einer Ausführungsform erfolgt eine Vorwärmung der Randbereiche der mindestens einen Fehlstelle durch einen defokussierten Laserstrahl. Durch den defokussierten Laserstrahl wird im Vergleich zum fokussierten Laserstrahl eine größere Fläche des emaillierten Gegenstandes mit geringerer Gesamtintensität und folglich geringerer Leistungsdichte bestrahlt. Vorteilhaft werden bei der Vorwärmung der Randbereiche mit einen defokussierten Laserstrahl Risse an den Grenzbereichen der Reparaturstelle vermieden, indem durch eine langsamere Durchwärmung mit gleichmäßigerer Wärmeverteilung sowie durch eine langsamere Abkühlung thermische Spannungen abgebaut werden.

Erfindungsgemäß wird das auf die mindestens eine Fehlstelle aufgetragene Beschichtungsmaterial unter Wärmeeintrag eingebrannt. Erfindungsgemäß erfolgt das Einbrennen des Beschichtungsmaterials (auch Bestrahlung oder Einschmelzen genannt) durch Wärmeeintrag. Der Wärmeeintrag weist dabei einen ersten fokussierten hochenergetischen Wärmeeintrag und einen zweiten defokussierten Wärmeeintrag auf. Im Sinne der Erfindung wird der erste Wärmeeintrag durch einen Laser und der zweite Wärmeeintrag durch einen Laser oder einen Induktor gewährleistet. Vorteilhaft erfolgt dadurch ein direktes und lokales Ausheilen der mindestens einen Fehlstelle.

Erfindungsgemäß umfasst das Einbrennen des auf die Fehlstelle aufgebrachten Beschichtungsmaterials unter Wärmeeintrag zwei Schritte.

Dabei umfasst das erfindungsgemäße Einbrennen einen ersten fokussierten hochenergetischen Wärmeeintrag durch Laserbestrahlung mit einer verbundenen Aufschmelzung des Bestrahlungsflecks und somit der vom Laserstrahl abgedeckte Bereich der Fehlstelle. Vorteilhaft kann mit dem Laser eine schnelle Rasterung über die Oberfläche mit einem damit verbundenen hohen Energieeintrag zum effizienten Erhitzen der Probe und Aufschmelzen der Fehlstelle erreicht werden. Allerdings kann die damit einhergehende Wärmeabstrahlung, welche auch in den die Fehlstelle umgebende intakten Emailschichten bis hin in das Substrat auftreten kann, Rissbildung in den Emailschichten hervorrufen.

Daher umfasst das erfindungsgemäße Einbrennen einen sich an den ersten fokussierten hochenergetischen Wärmeeintrag anschließenden zweiten defokussierten niederenergetischen Wärmeeintrag mit einer kontrollierten kontinuierlichen Abkühlung des Bestrahlungsflecks. Dabei weist der zweite defokussierte Wärmeeintrag eine geringere Leistungsdichte als der erste fokussierte hochenergetische Wärmeeintrag auf. Durch den zweiten defokussierten Wärmeeintrag wird im Vergleich zu dem einen hochenergetischen Wärmeeintrag aufweisenden ersten fokussierten Laserstrahl eine größere Fläche des emaillierten Gegenstandes mit geringerer Gesamtintensität und folglich geringerer Leistungsdichte bestrahlt. Vorteilhaft wird die durch den ersten Schritt erhitzte Probe dabei nicht abrupt, sondern gleichmäßig und langsam abgekühlt.

Erfindungsgemäß erfolgt der zweite defokussierte niederenergetische Wärmeeintrag durch Laserbestrahlung oder induktiv.

In einer Ausführungsform wird durch den zweiten defokussierten niederenergetischen Wärmeeintrag der definierte oder gesamte Bereich der Fehlstelle flächig mit einem defokussierten Laserstrahl bestrahlt. Während der Defokussierung des Laserstrahls wird eine Leistungsreduzierung in Form einer leistungsgeregelten Abkühlkurve vorgenommen. Vorteilhaft wird die durch den ersten fokussierten hochenergetischen Wärmeeintrag erhitzte Probe durch den anschließenden zweiten defokussierten niederenergetischen Wärmeeintrag mit einen defokussierten Laserstrahl nicht abrupt, sondern kontrolliert, kontinuierlich und langsam abgekühlt. Weiterhin vorteilhaft erfolgt durch die Behandlung durch den zweiten defokussierten niederenergetischen Wärmeeintrag mittels Laserbestrahlung eine lokale, konzentrierte und begrenzte Behandlung der behandelten Fehlstelle mit Tiefenwirkung. Durch die durch den defokussierten Laserstrahl hervorgerufene langsamere Abkühlung werden thermische Spannungen abgebaut und vorteilhaft Rissbildungen vermieden.

In einer weiteren Ausführungsform wird durch den zweiten defokussierten niederenergetischen Wärmeeintrag ein größerer Bereich der Fehlstelle flächig induktiv bestrahlt. Bei der Induktion entsteht die Wärme durch Wirbelstromverluste direkt im Substrat (nicht wie bei der Laserbehandlung an der Oberfläche der Emailschichten bzw. in den Emailschichten), und strahlt nach oben hin in die oberen Emailschichten ab. Insbesondere bei größer ausgebildeten Fehlstellen ist eine induktive Wärmebehandlung vorteilhaft. In einer Ausführungsform ist die Eindringtiefe des elektromagnetischen Feldes frequenz- und temperaturabhängig. Die Eindringtiefe der Induktionsstrahlung wird dabei so eingestellt, dass nicht mehr Energieeintrag mit damit einhergehender Wärmeableitung stattfindet als für die individuelle Fehlstelle benötigt wird. Vorteilhaft wird durch die gesteuerte Wärmebehandlung die Wärmeableitung in das intakte Material auf ein Minimum begrenzt. In einer Ausführungsform umfassen die für die Induktion variierbaren Verfahrensparameter wie die Leistung und/oder die Einwirkzeit und/oder den Bewegungsablauf des Induktors hinsichtlich Geschwindigkeit, Richtung und oszillierender Kurve. Vorteilhaft erfolgt durch die induktive Bestrahlung durch den zweiten defokussierten niederenergetischen Wärmeeintrag eine großflächige und gleichmäßige Behandlung der Fehlstelle ohne Rissbildung. In einer Ausführungsform erfolgt der Wärmeeintrag über induktive Bestrahlung durch einen Induktor.

In einer alternativen Ausführungsform erfolgt der zweite defokussierte niederenergetische Wärmeeintrag durch Laserbestrahlung und induktiv. Vorteilhaft werden durch diese Kombination von Laserbestrahlung und Induktion dabei die Merkmale der Laserbehandlung und der Induktion kombiniert, sodass gezielt das gewünschte Behandlungsergebnis einstellbar ist und die jeweiligen Vorteile beider Verfahren effektiv genutzt werden. Indem durch die Laserbestrahlung die Wärme in der Emailschicht erzeugt und durch die induktive Behandlung die Wärme im Substrat erzeugt wird, erfolgt vorteilhaft kein Verzug des emaillierten Gegenstandes durch eine thermische Belastung des Substrates. Weiterhin kann die Tiefenwirkung des Wärmeeintrags mit einer großflächigen Behandlung verbunden und somit vorteilhaft Rissbildung vermieden werden. Auch die Trägheit der Materialien ist geringer, wodurch vorteilhaft eine effektivere Regelung des Einbrennens erfolgen kann.

In einer weiteren alternativen Ausführungsform wird die zu behandelnde Fehlstelle durch den Wärmeeintrag rein induktiv erwärmt, um das entsprechende Beschichtungsmaterial einzubrennen. Dafür umfasst die Wärmebestrahlungsvorrichtung des Laserreparatursystems mindestens einen Induktor.

Die behandelte, ausgebesserte Fehlstelle wird nach dem Einbrennen abgekühlt.

In einer Ausführungsform erfolgt nach dem Einbrennen des Beschichtungsmaterials die Kontrolle als Qualitätskontrolle der behandelten, ausgebesserten Fehlstelle. Dies erfolgt analog zur Detektion der mindestens einen Fehlstelle. In einer Ausführungsform erfolgt die Kontrolle der behandelten, ausgebesserten Fehlstelle anhand einer optischen und/oder elektrischen Kontrolle.

In einer Ausführungsform, wenn durch die Detektion der bearbeiteten Fehlstelle festgestellt wird, dass die behandelte, ausgebesserte Fehlstelle sich mit dem intakten Bereich des emaillierten Gegenstandes homogen verbunden hat und/oder rissfrei erscheint, ist das Reparaturverfahren abgeschlossen. In einer weiteren Ausführungsform, wenn durch die Detektion der bearbeiteten Fehlstelle festgestellt wird, dass die behandelte, ausgebesserte Fehlstelle nicht homogen und/oder rissfrei erscheint (bspw. aufgrund ihrer Tiefe oder ihres Durchmessers), In einer bevorzugten Ausführungsform sind einzelne Verfahrensschritte in Abhängigkeit von der Fehlstelle und dem Behandlungserfolg mehrmals hintereinander wiederholbar anwendbar.

Vorteilhaft können dabei je nach Bedarf einzelne Verfahrensparameter angepasst bzw. nachkorrigiert werden.

In einer bevorzugten Ausführungsform weist das als Beschichtungsmaterial ausgebildete fein vermahlene Emailpulver oder Emailschlicker Korngrößen im Bereich von 0,35 µm bis 160 µm, bevorzugt 0,50 µm bis 70 µm, ganz bevorzugt 18 µm bis 50 µm auf. Vorteilhaft erfolgt durch das fein vermahlene Emailpulver oder Emailschlicker in diesen Größenordnungen eine im späteren Einbrennverfahren flächige Verschmelzung, welche auch mit einem kleinen Laserstrahldurchmesser erfolgen kann. Weiterhin ist durch fein gemahlenes Emailpulver oder Emailschlicker vorteilhaft eine bessere Auffüllung der Fehlstellen mit Emailpulver oder Emailschlicker sowie anschließendes Abziehen von überstehendem Emailpulver oder Emailschlicker möglich. Durch den feinen Mahlgrad ist weiterhin vorteilhaft die Packdichte des Emailpulvers oder Emailschlickers erhöht.

In einer Ausführungsform wird zur Optimierung des Beschichtungsmaterials, neben der chemischen Zusammensetzung und dem Mahlgrad, mindestens ein Füllstoff in die Emaille-Rezeptur eingebracht. Der mindestens eine Füllstoff dient der Herstellung von Volumen in der zu behandelnden Fehlstelle für die Reparatur. Weiterhin vorteilhaft wird durch den mindestens einen Füllstoff sowohl die Schrumpfung und Rissgefahr der Schmelze in derzu reparierenden Fehlstelle optimiert sowie eine effektive Einkopplung des Laserstrahls in die zu reparierende Fehlstelle gewährleistet. In einer Ausführungsform wird der Füllstoff ausgewählt aus pulverförmigen Metallpartikeln, Metallpulver, Metalloxidpulver, keramischer und/oder metallkeramischer Partikel.

In einer Ausführungsform, bei einer tieferen Beschädigung des emaillierten Gegenstandes, insbesondere bei einer Beschädigung des Substrats oder der Substratoberfläche, erfolgt die Reparatur der Fehlstelle im Substrat durch eine Gravur bis auf das Substrat. Anschließend wird die Fehlstelle mit fehlendem Material aufgefüllt. In einer Ausführungsform erfolgt die Materialauffüllung der Fehlstelle in einem metallischen Substrat durch den Eintragdes Füllstoffes. In einer Ausführungsform schließt sich an die Materialauffüllung der Fehlstelle ein Verschmelzungsprozess an, welcher bevorzugt durch einen thermischen Lasereintrag realisiert wird. Anschließend wird die behandelte Fehlstelle mit Emailpulver oder Emailschlicker überschichtet und dieses unter Wärmeeintrag eingebrannt. Die Materialauffüllung mittels des Füllstoffes und der sich anschließende Prozess wird so lange wiederholt und ausgeführt, bis die Fehlstelle vollständig gefüllt ist. In einer Ausführungsform liegt dann ein Mehrschichtensystem vor.

In einer bevorzugten Ausführungsform ist das Laserreparatursystem lösbar auf dem emaillierten Gegenstand angeordnet. In einer Ausführungsform ist der Laser beweglich in einer Befestigungsvorrichtung angeordnet. Vorteilhaft kann der Laser damit einfach handhabbar und transportierbar sein. In einer Ausführungsform ist die Befestigungsvorrichtung als Laserreparatursystem ausgebildet. In einer Ausführungsform wird das Laserreparatursystem auf den emaillierten Gegenstand in die Nähe der jeweiligen zu behandelnden Fehlstelle platziert.

In einer bevorzugten Ausführungsform umfasst das Laserreparatursystem mindestens eine Schwenkvorrichtung, eine Wärmebestrahlungsvorrichtung und eine Energieversorgungseinheit. In einer bevorzugten Ausführungsform ist die Wärmebestrahlungsvorrichtung beweglich und lösbar ausgebildet an der Schwenkvorrichtung angeordnet. In einer Ausführungsform umfasst die Energieversorgungseinheit mindestens einen Umrichter und/oder eine Steuereinheit.

In einer weiteren bevorzugten Ausführungsform umfasst das Laserreparatursystem ein Beschichtungssystem, welches einen Vorrat an Beschichtungsmaterial aufweist. In einer Ausführungsform ist das Beschichtungssystem an der Schwenkvorrichtung angebracht und mittels Laufschienen und/oder Führungsschienen an der Schwenkvorrichtung in xy-Richtung entlang der Horizontalen-Dimension relativ zum emaillierten Gegenstand bewegbar. In einer Ausführungsform wird das Beschichtungssystem beim Auftragen des Beschichtungsmaterials über die zu bearbeitende Fehlstelle platziert. In einer Ausführungsform ist das Beschichtungssystem als Sprühsystem ausgebildet. In einer Ausführungsform ist das Beschichtungssystem austauschbar ausgebildet. Vorteilhaft kann das Beschichtungsverfahren somit an die Form des zu behandelnden emaillierten Gegenstandes angepasst werden.

In einer weiteren bevorzugten Ausführungsform umfasst das Laserreparatursystem eine Vorbehandlungseinrichtung, welche eine Vorbehandlung der Fehlstelle vor der Beschichtung und dem sich daran anschließenden Einbrennen des Beschichtungsmaterials durch den Laser umfasst. In einer Ausführungsform umfasst die Vorbehandlungseinrichtung mechanische und chemische Reinigungseinheiten. In einer Ausführungsform umfasst die Vorbehandlungseinrichtung einen Schleifer und/oder einen Fräser und/oder Ätzvorrichtungen. In einer weiteren Ausführungsform umfasst die Vorbehandlungseinrichtung eine thermische Einrichtung. Dabei dient die thermische Einrichtung der Wärmezufuhr und ist als Heizplatte und/oder Induktor und/oder Laser ausgebildet. In einer Ausführungsform wird als Laser der Vorbehandlungseinrichtung derselbe Laser wie für das Einbrennen des Beschichtungsmaterials verwendet. Vorteilhaft wird die thermische Einrichtung auch für das Trocknen des aufgebrachten Beschichtungsmaterials verwendet.

In einer weiteren bevorzugten Ausführungsform umfasst das Laserreparatursystem ein Detektionssystem. In einer Ausführungsform umfasst das Detektionssystem eine Spannungsprüfungseinheit, welche eine Hochspannungsprüfungseinheit und/oder eine Niedrigspannungsprüfungseinheit aufweist. In einer Ausführungsform wird das Detektionssystem vor und/oder nach dem Auftragen des Beschichtungsmaterials und des sich daran anschließenden Einbrennens des Beschichtungsmaterials benutzt. In einer Ausführungsform umfasst das Detektionssystem weiterhin ein Kamerasystem zur visuellen Kontrolle.

Vorteilhaft kann die Wärmebestrahlungsvorrichtung, beispielsweise im Falle von Reparaturen, ausgetauscht werden. In einer bevorzugten Ausführungsform umfasst die Wärmebestrahlungsvorrichtung mindestens einen Laserbearbeitungskopf und mindestens einen Laser. In einer alternativen Ausführungsform umfasst die Wärmebestrahlungsvorrichtung mindestens einen Induktor mit dazugehöriger Energieversorgungseinheit.

In einer Ausführungsform umfasst die Wärmebestrahlungsvorrichtung mindestens einen Laserbearbeitungskopf und mindestens einen Laser sowie mindestens einen Induktor mit dazugehöriger Energieversorgungseinheit.

In einer bevorzugten Ausführungsform ist die Schwenkvorrichtung auf den emaillierten Gegenstand aufsetzbar ausgebildet, wobei die Unterseite der Schwenkvorrichtung auf die Oberfläche des emaillierten Gegenstandes zeigt. In einer Ausführungsform dient die Schwenkvorrichtung der Positionierung der Wärmebestrahlungsvorrichtung und somit des Laserbearbeitungskopfes. In einer bevorzugten Ausführungsform weist die Schwenkvorrichtung mindestens zwei Schwenkarme auf, auf welche eine Plattform angeordnet ist. In einer bevorzugten Ausführungsform ist auf der Plattform die Wärmebestrahlungsvorrichtung mit daran angebrachten Laser und Laserbearbeitungskopf montiert. In einer weiteren bevorzugten Ausführungsform ist die Plattform durch die mindestens zwei Schwenkarme in xy-Richtung entlang der Horizontalen-Dimension relativ zum emaillierten Gegenstand bewegbar ausgebildet.

In einer bevorzugten Ausführungsform weist die Schwenkvorrichtung mindestens zwei Positionen für die Positionierung der Wärmebestrahlungsvorrichtung auf. In einer Ausführungsform ist die Plattform durch die mindestens zwei Schwenkarme in mindestens zwei Positionen, bevorzugt den jeweils äußeren möglichen Endpositionen, einrastbarausgebildet, wodurch eine geometrisch bestimmte Positionierung der Plattform und somit der Wärmebestrahlungsvorrichtung mit Laser und Laserbearbeitungskopf erreicht wird. Vorteilhaft wird durch diese wiederholgenaue Positionierung eine gute Reproduzierbarkeit der Reparatur ermöglicht. Durch die definierte Positionierung der Wärmebestrahlungsvorrichtung ist diese in der jeweiligen Position stabil und fixiert. In einer bevorzugten Ausführungsform entspricht die erste Position der Schwenkvorrichtung der Ruheposition. In einer weiteren bevorzugten Ausführungsform entspricht die zweite Position der Bearbeitungsposition, wobei die zweite Position exakt über der Fehlstelle anordbar ausgebildet ist.

In einer Ausführungsform erfolgt die Fixierung der Schwenkvorrichtung auf der Oberfläche des emaillierten Gegenstandes durch mindestens ein Befestigungsmittel. Vorteilhaft ist die Schwenkvorrichtung damit sowohl auf eben liegenden als auch schräg ausgerichteten emaillierten Gegenständen gesichert. Durch den stabilen Halt des mindestens einen Befestigungsmittels ist die Schwenkvorrichtung zudem auch kopfüber auf einem emaillierten Gegenstand, beispielsweise beim Einsatz auf beschädigten Deckenpaneelen, fixiert. In einer Ausführungsform lässt sich das mindestens eine Befestigungsmittel einfach und ohne Beschädigungen auf der Oberfläche des emaillierten Gegenstandes zu hinterlassen, lösen. In einer bevorzugten Ausführungsform ist das mindestens eine Befestigungsmittel an der Unterseite der Schwenkvorrichtung lösbar angeordnet. In einer Ausführungsform ist das mindestens eine Befestigungsmittel als Magnet ausgebildet und wird auch als Magnetfuß bezeichnet. In einer Ausführungsform ist der mindestens eine Magnet als Elektromagnet ausgebildet, d.h. er ist magnetisiert bei Bestromung und somit im stromdurchflossenen Zustand auf der Emailschicht fixiert und ist im stromlosen Zustand unmagnetisch und somit von der Emailschicht lösbar ausgebildet.

In einer alternativen Ausführungsform ist das mindestens eine Befestigungsmittel als Vakuumsauger ausgebildet.

In einer Ausführungsform ist das mindestens eine Befestigungsmittel derart an der Schwenkvorrichtung angeordnet, dass die Schwenkvorrichtung an verschiedenen Positionen der Fehlstellen auf der Oberfläche des emaillierten Gegenstandes positionierbar ist und somit vorteilhaft auch eine Bearbeitung von Fehlstellen an den Rändern oder Kanten der emaillierten Gegenstände oder anderen schwer zugänglichen Bereichen wie Krümmungen realisierbar ist.

In einer Ausführungsform ist der Laserbearbeitungskopf lösbar mit der Wärmebestrahlungsvorrichtung verbunden. Dabei nimmt der Laserbearbeitungskopf die gleiche Position wie die Wärmebestrahlungsvorrichtung ein. Vorteilhaft kann der Laserbearbeitungskopf, beispielsweise im Falle von Reparaturen, ausgetauscht werden.

In einer Ausführungsform ist der Laserbearbeitungskopf die Schnittstelle des Lasers zum Werkstück und somit des emaillierten Gegenstandes. In einer Ausführungsform, wenn sich der Laser in der zweiten Position befindet, erfolgt ein Teil des erfindungsgemäßen Reparaturverfahrens durch das Einbrennen des Beschichtungsmaterials in die Fehlstelle durch Einkopplung des Laserstrahls. Die Fläche der Fehlstelle, welche vom Laserstrahl abgedeckt wird, wird als Laserstrahldurchmesser oder Bestrahlungsfleck bezeichnet. In einer Ausführung bedeckt der Laserstrahl die Fehlstelle zumindest teilweise. In einer Ausführungsform entspricht der Laserstrahldurchmesser mindestens dem Durchmesser der Fehlstelle.

In einer Ausführungsform ist der Laser lösbar mit der Wärmebestrahlungsvorrichtung verbunden. Vorteilhaft kann der Laser, beispielsweise im Falle von Reparaturen oder bei Verwendung eines anderen Lasertyps, z.B. bezüglich Wellenlänge und/oder Signalform, ausgetauscht werden. Die Art des verwendeten Lasers ist abhängig von der zu behandelnden Fehlstelle, beispielsweise hinsichtlich Material und Absorptionsvermögen. In einer Ausführungsform wird die Eindringtiefe der Laserstrahlung so eingestellt, dass die Laserstrahlung nicht tiefer in das Material eindringt, als für die Reparatur der Fehlstelle nötig ist und somit intaktes Material geschont wird.

In einer Ausführungsform weist die Wärmebestrahlungsvorrichtung einen Laserschutz und/oder einen Abstandshalter auf. In einer weiteren Ausführungsform umfasst die Wärmebestrahlungsvorrichtung ein fasergekoppeltes Pyrometer und/oder ein Kamerasystem.

In einer bevorzugten Ausführungsform wird das erfindungsgemäße Laserreparatursystem auf die Oberfläche des emaillierten Gegenstandes aufgesetzt und mittels des mindestens einen Befestigungsmittels auf dieser in der ersten Position fixiert. In einer Ausführungsform wird nachfolgend der an der Wärmebestrahlungsvorrichtung angeordnete Laserbearbeitungskopf durch die Schwenkvorrichtung auf die zweite Position gefahren, um dort mittels des Kamerasystems und eines im Kamerasystem angebrachten Fadenkreuzes eine mechanische Feinpositionierung des Laserbearbeitungskopfes vorab einzustellen. In einer alternativen Ausführungsform erfolgt die Grobpositionierung des Laserreparatursystems über das Fadenkreuz im Kamerasystem und/oder die Fokussieroptik im Laserbearbeitungskopf und die Feinpositionierung erfolgt durch eine Bilderkennungssoftware.

In einer Ausführungsform erfolgt anschließend eine thermische Vorbehandlung der Fehlstelle durch den Laser, wodurch eine definierte Geometrie zum erleichterten späteren Einbrennen des Beschichtungsmaterials erreicht wird. In einer weiteren Ausführungsform wird der an der Wärmebestrahlungsvorrichtung angeordnete Laserbearbeitungskopf anschließend in die erste Position zurückgefahren, sodass er nicht im Weg ist, wenn die Fehlstelle mit Beschichtungsmaterial aufgefüllt wird. Nachdem das Beschichtungsmaterial getrocknet ist und überschüssiges Beschichtungsmaterial abgezogen wurde, wird der an der Wärmebestrahlungsvorrichtung angeordnete Laserbearbeitungskopf nachfolgend in die zweite Position gefahren, damit das in die Fehlstelle gefüllte Beschichtungsmaterial durch Wärmebehandlung des Lasers eingebrannt werden kann. Nach erfolgtem Einbrennen wird der an der Wärmebestrahlungsvorrichtung angeordnete Laserbearbeitungskopf zurück in die erste Position gefahren, sodass die behandelte Stelle hinsichtlich des Reparaturerfolgs kontrolliert werden kann. Liegen dabei keine weiteren Mängel vor, kann das Laserreparatursystem von der Oberfläche des emaillierten Gegenstandes durch Lösen des mindestens einen Befestigungsmittels vom emaillierten Gegenstand entfernt werden. Sind weitere Nachkorrekturen nötig, kann der an der Wärmebestrahlungsvorrichtung angeordnete Laserbearbeitungskopf nochmals bzw. so oft, bis sich ein Erfolg eingestellt hat, in die zweite Position gefahren werden, um die behandelte Stelle nochmal thermisch zu behandeln und/oder weiteres aufgebrachtes Beschichtungsmaterial einzubrennen.

In einer bevorzugten Ausführungsform erfolgt der Wärmeeintrag des erfindungsgemäßen Reparaturverfahrens durch ein erfindungsgemäßes Laserreparatursystems. Dabei wird das Laserreparatursystem vor der Detektion der mindestens einen Fehlstelleoder nach der Detektion der mindestens einen Fehlstelle oder vor der Vorbehandlung der mindestens einen Fehlstelle oder nach der Vorbehandlung der mindestens einen Fehlstelle auf den emaillierten Gegenstand aufgesetzt. In einer bevorzugten Ausführungsform wird das erfindungsgemäße Laserreparatursystem nach Beendigung des erfolgreich verlaufenen erfindungsgemäßen Reparaturverfahrens vom emaillierten Gegenstand abgenommen.

In einer Ausführungsform wird unter dem Laser das Gerät verstanden, mit dem Laserstrahlen erzeugt werden. In einer Ausführungsform werden die Verfahrensparameter angepasst ausgewählt. In einer Ausführungsform umfassen wichtige und variierbare Verfahrensparameter der Laserbestrahlung hinsichtlich Wärmeausbreitung und Fokussierung Parameter wie die Materialien von Substrat und Email und/oder die Vorbehandlung und/oder die Wahl des Lasertyps verbunden mit der Einstellung der Wellenlänge und/oder der Leistungsdichte und/oder des Strahldurchmessers und/oder der Zeitspanne der Bestrahlung und/oder der Pulsdauer (bei gepulst betriebenen Lasern).

In einer Ausführungsform wird die zu behandelnde Fehlstelle einmalig mit dem Laser bestrahlt und aufgeschmolzen, im Folgenden auch Einfachbestrahlung genannt. In einer weiteren Ausführungsform wird die zu behandelnde Fehlstelle mehrfach mit dem Laser bestrahlt und aufgeschmolzen, im Folgenden auch Mehrfachbestrahlung genannt. Bei der Mehrfachbestrahlung wird zusätzlich noch die Frequenz des Pulses (zeitlicher Pulsabstand) sowie die Pulsanzahl variiert.

In einer Ausführungsform ist der Laser an die Materialeigenschaften wie beispielsweise dem Absorptionsvermögen der Emaille angepasst. In einer Ausführungsform ist der Laser zum Beschriften, Schneiden und/oder der Oberflächenbearbeitung ausgebildet. Vorteilhaft kann dadurch während der Reparatur eine Beschriftung des emaillierten Gegenstandes vorgenommen werden.

In einer Ausführungsform kommen als Laser Gaslaser oder Festkörperlaser für das erfindungsgemäße Reparaturverfahren zum Einsatz. In einer Ausführungsform wird ein CO₂-Laser als Gaslaser verwendet. In einer Ausführungsform wird ein Faserlaser oder Diodenlaser oder diodengepumpter Laser als Festkörperlaser verwendet. In einer bevorzugten Ausführungsform wird ein Nd:YAG-Laser (Neodym-dotierter Yttrium-Aluminium-Granat-Laser) verwendet. In einer weiteren Ausführungsform ist als Laser jeder beliebige Bautyp einsetzbar, ohne auf eine bestimmte Laserquelle festgelegt zu sein.

In einer bevorzugten Ausführungsform beträgt die Laserleistung 5 W bis 200 W, bevorzugt 5 W bis 50 W, ganz besonders bevorzugt 5 W bis 20 W. Dabei wird die Laserleistung in Abhängigkeit von der jeweiligen Materialzusammensetzung und insbesondere der Korngröße gewählt.

In einer Ausführungsform ist die Signalform des Lasers gepulst und/oder als Dauerstrich (continuous wave, cw) ausgebildet. In einer bevorzugten Ausführungsform erfolgt die Laserstrahlung der mindestens einen Fehlstelle durch einen gepulsten Festkörperlaser. In einer Ausführungsform, bei gepulst betriebenem Laser, beträgt die Pulswiederholfrequenz 1 kHz bis 1000 kHz, bevorzugt 20 kHz bis 200 kHz. In einer bevorzugten Ausführungsform, bei gepulst betriebenem Laser, beträgt die Pulsdauer 9 ns bis 250 ns, bevorzugt 50 ns bis 150 ns.

In einer Ausführungsform ist die Vorschubgeschwindigkeit des Laserbearbeitungskopfes abhängig von der Fehlergröße und liegt im Bereich von 5 bis 100 mm/sec, bevorzugt im Bereich von 5 bis 40 mm/sec.

In einer Ausführungsform weist der Emailschlicker bei einer Wellenlänge im nahen Infrarot-Bereich von 500 nm bis 1070 nm einen Absorptionsgrad von ca. 65% bis 50% auf.

In einer bevorzugten Ausführungsform liegt die Wellenlänge der Laserstrahlung für die Reparatur der Emailschichten im nahen Infrarot-Bereich, bevorzugt von 780 nm bis 3 µm, besonders bevorzugt von 800 nm bis 1070 nm.

In einer Ausführungsform ist es bei einer Beschichtung möglich, gezielt Gravuren auf eine Emailschicht einzubringen und mit darunterliegenden Emailschichten zu verschmelzen. In einer Ausführungsform ist mit Hilfe des Lasers das Erstellen von Gravuren in die Oberfläche der Emailschicht möglich. In einer alternativen Ausführungsform ist die Beschriftung der Emailschicht durch die Lasergravur auch ohne damit verbundenes Reparaturverfahren und/oder ohne damit verbundenem Laserreparatursystem möglich.

In einer Ausführungsform, bei unveränderlicher Positionierung des zu behandelnden emaillierten Gegenstandes, wird eine Änderung der Fokalebene relativ zur Materialoberfläche des emaillierten Gegenstandes vorgenommen. In einer Ausführungsform wird hierzu das Laserreparatursystem in z-Richtung entlang der Vertikalen-Position relativ zum emaillierten Gegenstand bewegt. In einer bevorzugten Ausführungsform umfasst der Laserbearbeitungskopf hierfür eine Fokussieroptik, um den Laserstrahl zwischen optischen Resonator des Lasers und dem Laserbearbeitungskopf zu führen. In einer Ausführungsform umfasst die Fokussieroptik mindestens einen verstellbaren Spiegel und/oder mindestens einen Gelenkarm und/oder mindestens eine Linse, wodurch ein in der Leistungsdichte variabler Bestrahlungsfleck durch Fokussierung und Defokussierung auf die zu behandelnde Fehlstelle automatisch eingestellt werden kann. In einer Ausführungsform wird durch die Fokussieroptik eine Fokussierung und/oder Defokussierung des Laserstrahls auf die Fehlstelle vorgenommen. Vorteilhaft kann damit zeitlich effektiv zwischen einem defokussierten und einem fokussierten Laserstrahl je nach Behandlungszweck gewechselt werden.

In einer Ausführungsform umfassen die Spiegel der Fokussieroptik mindestens einen Umlenkspiegel und/oder mindestens einen Scannerspiegel, wobei die Spiegel mit Hilfe eines Antriebs schwenkbar ausgebildet sind. In einer Ausführungsform ist der Antrieb der Spiegel als Drehantrieb, wie bspw. als Galvanometer-Scanner, ausgebildet. In einer weiteren Ausführungsform ist der Scannerantrieb als Aktor, wie bspw. als Piezoantrieb, ausgebildet. In einer weiteren Ausführungsform umfasst die Fokussieroptik Lichtleitfasern wie Glasfasern und/oder, wodurch vorteilhaft eine erhöhte Flexibilität des Systems möglich ist. Dadurch ist auch ein mobiler Einsatz des Lasers möglich.

Alternativ, um einen in der Leistungsdichte variablen Bestrahlungsfleck bei unveränderlicher Positionierung das Laserreparatursystem zu erreichen, muss der emaillierte Gegenstand in z-Richtung entlang der Vertikalen-Position relativ zum emaillierten Gegenstand entsprechend nach oben oder unten bewegt werden.

In einer Ausführungsform ist das Laserreparatursystems kompakt und transportabel ausgestaltet. In einer bevorzugten Ausführungsform ist das Laserreparatursystems für den mobilen Einsatz als tragbares Handgerät für die Reparatur vor Ort ausgestaltet. Vorteilhaft weist das Laserreparatursystem eine handhabbare transportable Größe wie bspw. die eines Staubsaugers oder Koffers mit einem maximalen Gewicht von 20 kg auf. Vorteilhaft kann das Laserreparatursystem auch in der Kabine eines Flugzeuges oder in einem Kofferraum mitgeführt werden. Durch die kompakte und transportable Ausgestaltung des Laserreparatursystems kann dieses manuell über die Oberfläche des zu behandelnden emaillierten Gegenstandes bewegt werden. Vorteilhaft können dadurch mit Fehlstellen versehene großformatige emaillierte Gegenstände, die kompliziert transportfähig sind, "vor Ort", d.h. zum Beispiel auf Baustellen, repariert werden.

In einer Ausführungsform erfolgt das erfindungsgemäße Reparaturverfahren am eingebauten, mindestens eine Fehlstelle aufweisenden emaillierten Gegenstand. Durch das mobile Laserreparatursystem ist daher flexibel genug, um die entsprechenden Stellen zu behandeln. In einer alternativen Ausführungsform erfolgt das erfindungsgemäße Reparaturverfahren am mindestens eine Fehlstelle aufweisenden emaillierten Gegenstand, welcher für die Reparatur und/oder Wartung und/oder vor der finalen Montage einzeln vorliegt.

In einer Ausführungsform sind durch den Einsatz des Lasersystems für die Reparatur auch dickere Emailschichten und/oder Substrate der emaillierten Gegenstände reparierbar, da durch die Fokussieroptik eine Wärmeabwanderung im Material gezielt unterbunden wird.

In einer Ausführungsform erfolgt das erfindungsgemäße Reparaturverfahren der Fehlstellen in Zusammenhang mit der Wartung der entsprechenden emaillierten Gegenstände, wodurch vorteilhaft die Wirtschaftlichkeit durch Anbieten einer Komplettlösung gesteigert wird. Beispielsweise wird, im Falle von Anlagen oder Speichern, die Zeit des Stillstandes effektiv genutzt und der Leerlauf der Anlagen auf ein Minimum reduziert wird.

In einer Ausführungsform erfolgt die erfindungsgemäße Reparatur der Fehlstellen größtenteils rissfrei, was vorteilhaft durch die lokale und direkte Behandlung sowie flexibel einstellbaren Durchläufen der Fehlstelle ermöglicht wird. Dabei ist die Anzahl der Beschichtungen und/oder der Bestrahlungen variabel gestaltet und richtet sich auch bspw. nach der Tiefe oder dem Durchmesser der zu behandelnden Fehlstelle. Die Verfahrensparameter für die Beschichtung und/oder Bestrahlungen sind dabei flexibel anpassbar. Weiterhin vorteilhaft können während des erfindungsgemäßen Reparaturverfahrens entweichende, vom Substrat stammende Gase nach außen entweichen, da die Oberfläche im Bereich der behandelten Fehlstelle während des Reparaturverfahrens offen ist und somit eine Minimierung der unerwünschten Poren, Blasen, Risse oder Nadelstiche erfolgt. Vorteilhaft ist die mindestens eine aufgebrachte Grundemailschicht und/oder Deckemailschicht hinsichtlich Farbgebung und/oder Oberflächeneigenschaften an die vorhandene intakte Grundemailschicht und/oder Deckemailschicht angepasst, da die zur Reparatur verwendete Grundemail und/oder Deckemail dieselbe Zusammensetzung und Eigenschaften wie das intakte Grundemail und/oder Deckemail aufweist. Vorteilhaft wird dadurch die Rissbildung oder die Bildung von Spannungslinien aufgrund übereinstimmender Materialeigenschaften vermieden und die reparierte Stelle ist zudem nicht zu erkennen.

In einer Ausführungsform wird durch das erfindungsgemäße Reparaturverfahren eine Anbindung der Emailschichten an das Substrat und somit eine stabile Haftfestigkeit gewährleistet. Vorteilhaft weisen die reparierten Fehlstellen somit einen homogenen Gesamteindruck auf. Weiterhin wird durch die verbesserte Haftfähigkeit vorteilhaft ein Abplatzen der Emailschichten vom Substrat auch an Ecken oder Kanten reduziert. Vorteilhaft wird dadurch eine hohe Produktqualität des reparierten emaillierten Gegenstandes sichergestellt.

Aufgrund der Flexibilität der Verfahrensparameter der eingesetzten Wärmestrahlung hinsichtlich Wärmeausbreitung und Fokussierung durch Einstellung von bspw. Wellenlänge, Leistungsdichte und Pulsdauer ist vorteilhaft eine individuelle Anpassung auf die Eigenschaften der emaillierten Gegenstände wie Materialzusammensetzung oder Wanddicken der Substrate möglich. Vorteilhaft wird durch das erfindungsgemäße Reparaturverfahren somit eine energie- und zeiteffiziente Behandlung gewährleistet, da die Verfahrensparameter gezielt ausgewählt und gesteuert werden. Weiterhin vorteilhaft kann der Aufschmelz- und Einbrennvorgang durch den gezielten Energieeintrag durch den Laser, im Gegenteil zu einem den gesamten emaillierten Gegenstand global und großflächig aufheizenden Ofen, energiesparend ausgeführt werden.

In einer Ausführungsform ist das erfindungsgemäße Reparaturverfahren direkt im Anschluss an die Fertigung der emaillierten Gegenstände als Qualitätskontrolle und/oder oder direkt vor Ort an der Baustelle oder Montagestelle anwendbar.

In einer Ausführungsform wird das erfindungsgemäße Reparaturverfahren an emaillierten Behältern oder Speichern wie Silos oder Lagertanks angewandt. Dabei können die Silos als Speicher für Agrarprodukte, Trinkwasser, Abwasser sowie als künstliche Fischzuchtbecken und den Einsatz in der Biogastechnik verwendet werden. Die Silos können Durchmesser von bis zu 60 m und Höhen bis zu 30 m aufweisen. Silos dieser Größenordnungen setzen sich aus Platten zusammen und werden meist am Bestimmungsort zusammengebaut. Häufig werden als Trinkwasserreservoirs ausgebildete Silos zudem in Wüstenregionen eingesetzt, womit extreme Temperatur- und Luftbedingungen einhergehen. Weiterhin kann es durch die Montage vor Ort, bspw. beim Schleifen, zu Beschädigungen und Fehlstellen der emaillierten Speicher kommen, wodurch Korrosion auftreten kann. Beim Auftreten von Fehlstellen ist eine Reparatur dieser Fehlstellen aufgrund der Größendimensionen daher meist nur vor Ort möglich.

Weiterhin können auch großflächig emaillierte Paneele in Tunneln oder bei U-Bahnen Defekte, bspw. durch Steinschläge, aufweisen.

Auch Fehlstellen in emaillierten Verkleidungen oder emaillierten Gegenständen von Räumen, Großbehältern, Speichern, Rohren, Schildern, Industrieteilen, Verbrauchsgütern, Kochgefäßen und Apparaten wie bspw. Rührbehälter können mit dem erfindungsgemäßen Verfahren repariert werden. Vorteilhaft kann durch den Einsatz von Lichtleitfasern der Laserstrahl auch objektangepasst und gezielt an schwer zugänglich Stellen wie Biegungen in Rohren oder Ecken von Behältern geführt werden.

In einer weiteren Ausführungsform ist auch die Reparatur von Fehlstellen in Glas oder Glasschichten möglich, da Glas ähnliche Eigenschaften wie Emailschichten aufweist. In einer weiteren Ausführungsform ist es bei einer Beschichtung auch möglich, gezielt Gravuren auf Glas einzubringen und mit darunterliegenden Glasschichten zu verschmelzen.

Für die Realisierung der Erfindung ist es auch zweckmäßig, die vorbeschriebenen erfindungsgemäßen Ausgestaltungen, Ausführungsformen und Merkmale der Ansprüche in jeder Anordnung miteinander zu kombinieren.

### Ausführungsbeispiel

Nachfolgend soll die Erfindung anhand eines Ausführungsbeispiels eingehender erläutert werden. Das Ausführungsbeispiel bezieht sich auf die Laserreparatur emaillierter Bleche und soll dabei die Erfindung beschreiben ohne diese zu beschränken.

Anhand von Zeichnungen wird die Erfindung näher erläutert. Dabei zeigen
- Fig. 1: eine nicht maßstabsgetreue Prinzipskizze des erfindungsgemäßen Laserreparatursystems, welches in der Nähe einer exemplarischen Fehlstelle eines emaillierten Gegenstandes platziert ist,
- Fig. 2: das erfindungsgemäße Laserreparatursystem in der Ansicht von vorne, wobei sich in Figur 2a die Schwenkvorrichtung in der ersten Position und sich die Schwenkvorrichtung in Figur 2b in der zweiten Position befindet,
- Fig. 3: ein Übersichtsschema zum erfindungsgemäßen Laserreparaturverfahren.

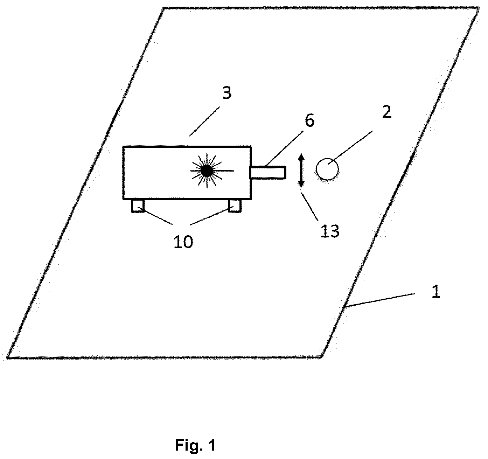

Figur 1 zeigt eine nicht maßstabsgetreue Prinzipskizze des erfindungsgemäßen Laserreparatursystems 3, welches in der Nähe einer Fehlstelle 2 eines emaillierten Gegenstandes 1 platziert ist. Das Laserreparatursystem 3 ist mittels Befestigungsmittel 10 auf der Oberfläche des emaillierten Gegenstandes 1 angeordnet. Der emaillierte Gegenstand 1 ist vorliegend als emailliertes Siloblech ausgebildet. Die Befestigungsmittel 10 sind dabei als Magnetfüße ausgebildet. Der Laserbearbeitungskopf 6 ist Teil der Wärmebestrahlungsvorrichtung (in der Figur nicht gezeigt) und auf die Fehlstelle 2 gerichtet. Durch die Anordnung auf der Plattform der Schwenkvorrichtung (in der Figur nicht gezeigt) ist der Laserbearbeitungskopf 6 in xy-Richtung entlang der Horizontalen-Dimension 13 bewegbar ausgebildet.

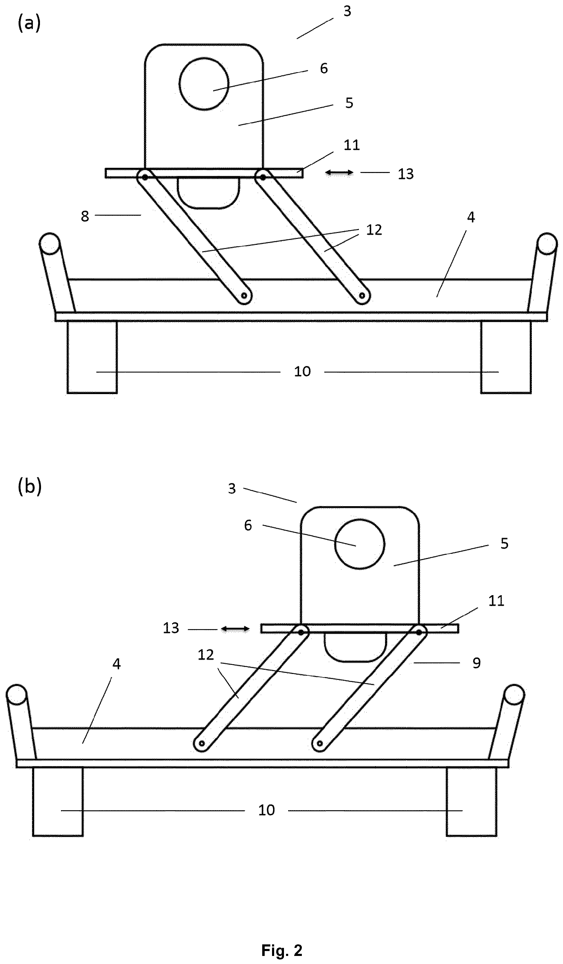

Figur 2 zeigt das erfindungsgemäße Laserreparatursystem 3, welches eine Schwenkvorrichtung 4 und eine Wärmebestrahlungsvorrichtung 5 aufweist, in der Ansicht von vorne. Das Laserreparatursystem 3 kann über zwei als Magnetfüße ausgebildete Befestigungsmittel 10 auf der Oberfläche eines emaillierten Gegenstands 1 wie bspw. ein emailliertes Siloblech (in der Figur nicht gezeigt) platziert werden. Die Befestigungsmittel 10 sind als Elektromagnete ausgebildet Weiterhin sind die Befestigungsmittel 10 im stromdurchflossenen Zustand magnetisch und somit auf der Oberfläche der Emailschicht des emaillierten Gegenstands 1 fixierbar ausgebildet und ist im stromlosen Zustand unmagnetisch und somit von der Emailschicht des emaillierten Gegenstands 1 lösbar ausgebildet. Die Schwenkvorrichtung 4 weist weiterhin eine Plattform 11 mit vier daran angeordneten Schwenkarmen 12 auf. Durch die Schwenkarme 12 ist die Plattform 11 und die darauf angeordnete Wärmebestrahlungsvorrichtung 5 in xy-Richtung entlang der

Horizontalen-Dimension 13 bewegbar ausgebildet. Die auf der Plattform 11 der Schwenkvorrichtung angebrachte Wärmebestrahlungsvorrichtung 5 weist einen Laserbearbeitungskopf 6 auf, welcher die Schnittstelle des in der Wärmebestrahlungsvorrichtung 5 angebrachten Lasers (in der Figur nicht gezeigt) zum emaillierten Gegenstand 1 ist.

Figur 2a zeigt die Schwenkvorrichtung 4 in der ersten Position 8, welche als Ruheposition funktioniert. Figur 2b zeigt die Schwenkvorrichtung 4 in der zweiten Position 9, welche als Bearbeitungsposition funktioniert.

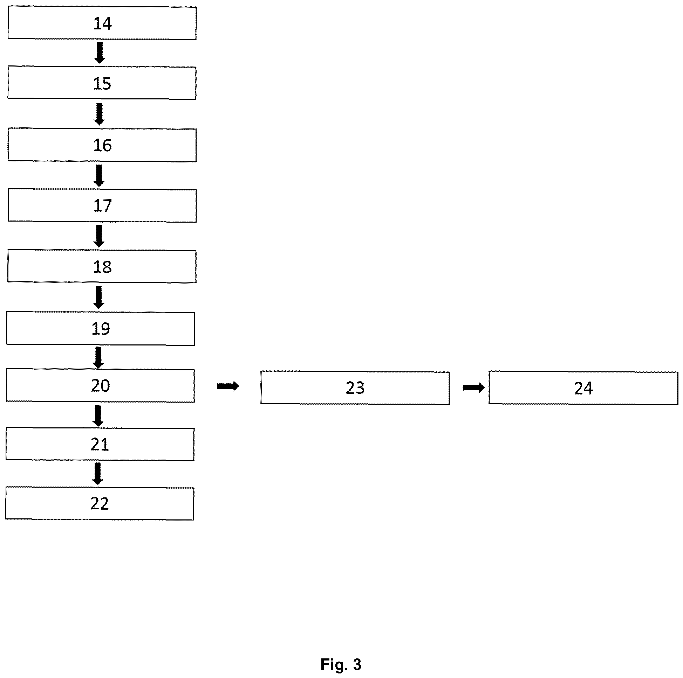

Figur 3 zeigt ein Übersichtsschema zum erfindungsgemäßen Laserreparaturverfahren. Zuerst wird die Fehlstelle detektiert 14. Dies erfolgt über eine Hochspannungsprüfung.

Anschließend wird das erfindungsgemäße Laserreparatursystem aufgesetzt 15. Dies erfolgt mittels der Magnetfüße, welche auf der Unterseite der Schwenkvorrichtung angebracht sind und auf der Oberfläche des emaillierten Siloblechs platziert werden. Die Elektromagnete werden bestromt und sorgen für die Fixierung des Laserreparatursystems auf der Oberfläche.

Nachfolgend erfolgt die Ausrichtung des Lasers 16. Hierfür wird der Laserbearbeitungskopf in die Bearbeitungsposition gefahren. Die Ausrichtung des Lasers 16 geschieht durch geeignete Positionierung des Laserbearbeitungskopfes über der Fehlstelle. Für eine exakte Positionierung und Ausrichtung des Laserbearbeitungskopfes mit einhergehender Lokalisierung der Fehlstelle sorgt eine Bilderkennungssoftware und ein Kamerasystem mit Fadenkreuz. Dadurch wird eine mechanische Feinpositionierung ermöglicht.

Anschließend erfolgt die Vorbehandlung 17. Für die mechanische und chemische Vorbehandlung befindet sich die Wärmebestrahlungsvorrichtung in der Ruheposition. Die mechanische Vorbehandlung umfasst ein Auffräsen der Fehlstelle, die chemische Vorbehandlung umfasst das Ätzen der Fehlstelle. Weiterhin werden die Fehlstelle und der intakte Bereich um die Fehlstelle entfettet. Für die thermische Vorbehandlung wird die Wärmebestrahlungsvorrichtung in die Bearbeitungsposition gefahren. Dabei werden mit Hilfe des Laserstrahls aus dem Laserbearbeitungskopf Verunreinigungen auf der Oberfläche der Fehlstelle und des intakten Bereichs herum verdampft.

Nachfolgend wird das Beschichtungsmaterial auf die Fehlstelle aufgebracht 18. Das Beschichtungsmaterial ist als Deckemailschlicker ausgebildet und füllt dabei die Fehlstelle komplett aus. Der Deckemailschlicker entspricht in seiner Zusammensetzung und Eigenschaften der Deckemaile des emaillierten Siloblechs. Der Deckemailschlicker wird über ein Sprühsystem in und auf die Fehlstelle gebracht. Beim Aufbringen des Beschichtungsmaterials auf die Fehlstelle 18 wird die Wärmebestrahlungsvorrichtung in die Ruheposition gefahren. Überschüssiger Deckemailschlicker, welcher über der Oberfläche des emaillierten Siloblechs ragt, wird mit einer Klinge abgezogen. Anschließend erfolgt die Trocknung des Deckemailschlickers bei ca. 80°C bis 100°C.

Anschließend erfolgt der Einbrennvorgang 19des Deckemailschlickers. Hierfür wird die Fehlstelle mit einem Laserstrahl aus dem Laserbearbeitungskopf bestrahlt. Dazu wird die Wärmebestrahlungsvorrichtung in die Bearbeitungsposition gefahren. Es handelt sich hierbei um einen gepulst betriebenen Nd:YAG Laser mit einer Wellenlänge von 1064 nm, einer Laserleistung von 10 W bis 20 W und einer Pulsdauer von 100 ns.

Nachfolgend erfolgt die Kontrolle 20 der behandelten, ausgebesserten Fehlstelle. Hierfür wird die Wärmebestrahlungsvorrichtung in die Ruheposition zurückgefahren. Die Kontrolle erfolgt wiederum über eine Hochspannungsprüfung. Ist die Kontrolle erfolgreich 21, indem eine homogene Schicht wiederhergestellt wurde und es zu keiner Rissbildung kam, ist der Prozess abgeschlossen 22. Es genügte somit ein Durchlauf des erfindungsgemäßen Reparaturverfahrens, um die Fehlstelle zu reparieren, d.h. einmal beschichten und einmal bestrahlen.

Ist die Kontrolle nicht erfolgreich 23, muss das erfindungsgemäße Reparaturverfahren wiederholt werden 24. Dabei kann das Beschichten und das Bestrahlen beliebig oft auch hintereinander wiederholt werden. Dies geschieht so lange, bis die Kontrolle erfolgreich ist 21.

### Bezugszeichen

- 1: Emaillierter Gegenstand
- 2: Fehlstelle
- 3: Laserreparatursystem
- 4: Schwenkvorrichtung
- 5: Wärmebestrahlungsvorrichtung
- 6: Laserbearbeitungskopf
- 7: Laserstrahl
- 8: Erste Position der Schwenkvorrichtung
- 9: Zweite Position der Schwenkvorrichtung
- 10: Befestigungsmittel
- 11: Plattform
- 12: Schwenkarm
- 13: Bewegung in xy-Richtung entlang der Horizontalen-Dimension
- 14: Fehlstelle detektieren
- 15: Laserreparatursystem aufsetzen
- 16: Ausrichtung des Lasers
- 17: Vorbehandlung
- 18: Beschichtungsmaterial einbringen
- 19: Einbrennvorgang
- 20: Kontrolle
- 21: Kontrolle erfolgreich
- 22: Prozess abgeschlossen
- 23: Kontrolle nicht erfolgreich
- 24: Reparaturverfahren wiederholen

## Patentansprüche

1. Verfahren zur Reparatur mindestens einer Fehlstelle in einem Glas oder glaskeramischen Überzug, wobei das Glas oder der glaskeramische Überzug auf einem metallischen oder keramischen Substrat angeordnet ist, sowie zur Reparatur von Fehlstellen auf der keramischen Substratoberfläche,
wobei das Verfahren folgende Verfahrensschritte umfasst:
- Aufbringen von Emailpulver oder Emailschlicker als Beschichtungsmaterial auf die mindestens eine Fehlstelle durch ein Beschichtungsverfahren,
- Entfernung von überstehenden überschüssigen Beschichtungsmaterial,
- Trocknung des aufgetragenen Beschichtungsmaterials,
- Einbrennen des aufgebrachten Beschichtungsmaterials unter Wärmeeintrag, umfassend folgende Schritte:
▪ einen ersten fokussierten hochenergetischen Wärmeeintrag durch Laserbestrahlung mit einer verbundenen Aufschmelzung des Bestrahlungsflecks,
▪ einen zweiten defokussierten niederenergetischen Wärmeeintrag mit einer kontrollierten kontinuierlichen Abkühlung des Bestrahlungsflecks, wobei der zweite defokussierte niederenergetische Wärmeeintrag durch Laserbestrahlung oder induktiv erfolgt.

2. Verfahren nach Anspruch 1, wobei das Verfahren mindestens einen Durchlauf aufweist, wobei einzelne Verfahrensschritte in Abhängigkeit von der Fehlstelle und dem Behandlungserfolg mehrmals hintereinander wiederholbar anwendbar sind.

3. Verfahren nach einem der Ansprüche 1 bis 2, weiterhin umfassend eine Detektion der mindestens einen Fehlstelle vor dem Auftragen des Beschichtungsmaterials und/oder eine Kontrolle der behandelten mindestens einen Fehlstelle nach dem Einbrennen des aufgebrachten Beschichtungsmaterials, **dadurch gekennzeichnet, dass** die Detektion und/oder Kontrolle mittels einer optischen und/oder elektrischen Prüfung erfolgt, wobei
- die optische Prüfung eine visuelle Durchsicht umfasst, und
- die elektrische Prüfung eine Hochspannungsprüfung gemäß DIN EN 14430 oder eine Niedrigspannungsprüfung gemäß DIN EN ISO 8289 umfasst.

4. Verfahren nach einem der Ansprüche 1 bis 3, weiterhin umfassend eine mechanische und/oder chemische und/oder thermische Vorbehandlung der mindestens einen Fehlstelle.

5. Verfahren nach einem der Ansprüche 1 bis 4, **dadurch gekennzeichnet, dass** die Laserbestrahlung durch einen gepulsten Festkörperlaser im nahen Infrarotbereich von 780 nm bis 3 µm erfolgt, wobei der Festkörperlaser als Nd:YAG Laser mit Pulsdauern zwischen 9 ns bis 250 ns und einer Laserleistung von 5 W bis 200 W ausgebildet ist.

6. Verfahren nach einem der Ansprüche 1 bis 5, **dadurch gekennzeichnet, dass** der Wärmeeintrag durch ein Laserreparatursystem erfolgt, wobei das Laserreparatursystem vor dem Aufbringen des Beschichtungsmaterials auf das Glas oder den glaskeramischen Überzug aufgesetzt und nach dem Einbrennen von dem Glas oder dem glaskeramischen Überzug abgenommen wird.

7. Verfahren nach einem der Ansprüche 1 bis 6, **dadurch gekennzeichnet, dass** das Beschichtungsmaterial dieselben Eigenschaften wie das die mindestens eine Fehlstelle aufweisende Glas oder der glaskeramische Überzug aufweist und als Emailschlicker oder Emailpulver mit Korngrößen von 0,35 bis 160 µm ausgebildet ist.

8. Verfahren nach einem der Ansprüche 1 bis 7, **dadurch gekennzeichnet, dass** das Beschichtungsverfahren ausgewählt ist aus einem Spritzverfahren, einem Streichverfahren, einem Rakelverfahren, einem Gießverfahren, einem Flutverfahren, einem Tauchverfahren, einem Siebdruckverfahren und/oder einem Sprühverfahren.

9. Laserreparatursystem zur Reparatur von Fehlstellen nach einem der Ansprüche 1 bis 8, umfassend mindestens eine austauschbare Schwenkvorrichtung, eine austauschbare Wärmebestrahlungsvorrichtung und eine Energieversorgungseinheit **dadurch gekennzeichnet, dass**
- das Laserreparatursystem auf dem Glas oder den glaskeramischen Überzug lösbar angeordnet ist,
- die Wärmebestrahlungsvorrichtung beweglich und lösbar ausgebildet an der Schwenkvorrichtung angeordnet ist,
- die Wärmebestrahlungsvorrichtung mindestens einen austauschbaren Laserbearbeitungskopf und mindestens einen austauschbaren Laser umfasst,
- die Schwenkvorrichtung mindestens zwei Positionen für eine Positionierung der Wärmebestrahlungsvorrichtung aufweist, wobei eine erste Position einer Ruheposition und eine zweite Position einer Bearbeitungsposition über der Fehlstelle entspricht, wobei Schwenkvorrichtung mindestens zwei Schwenkarme aufweist, auf welchen eine Plattform angeordnet ist, wobei die Wärmebestrahlungsvorrichtung auf der Plattform montiert und die Plattform durch die Schwenkarme in xy-Richtung entlang der Horizontalen-Dimension relativ zum emaillierten Gegenstand zwischen der ersten und zweiten Position bewegbar ausgebildet ist und wobei das Laserreparatursystem durch mindestens ein an der Unterseite der Schwenkvorrichtung angebrachtes Befestigungsmittel auf dem Glas oder dem glaskeramischen Überzug lösbar angeordnet ist, wobei die Unterseite der Schwenkvorrichtung zum Glas oder zum glaskeramischen Überzug zeigt.

10. Laserreparatursystem nach Anspruch 9, weiterhin umfassend ein Beschichtungssystem und/oder eine Vorbehandlungseinrichtung und/oder ein Detektionssystem.

11. Laserreparatursystem nach einem der Ansprüche 9 oder 10, **dadurch gekennzeichnet, dass** der Laserbearbeitungskopf während des Aufbringens des Beschichtungsmaterials auf die mindestens einen Fehlstelle und/oder der Entfernung von überstehenden überschüssigen Beschichtungsmaterial und/oder der Trocknung des Beschichtungsmaterials und/oder der Detektion und/oder Kontrolle und/oder der Vorbehandlung durch einen Laser in der ersten Position der Schwenkvorrichtung ausgerichtet ist und während des Einbrennens des aufgebrachten Beschichtungsmaterials unter Wärmeeintrag und/oder der thermischen Vorbehandlung in der zweiten Position der Schwenkvorrichtung ausgerichtet ist.

12. Verwendung eines Verfahrens zur Reparatur von Fehlstellen nach einem der Ansprüche 1 bis 8 sowie eines Laserreparatursystems nach einem der Ansprüche 9 bis 11 zur Reparatur von Fehlstellen in Behältern oder Speichern, Verkleidungen von Räumen, Rohren, Schildern, Industrieteilen, Verbrauchsgütern, Kochgefäßen, Apparaten sowie Paneelen in Tunneln oder U-Bahnen.

## Claims

1. Method for repairing at least one defect in a glass or glass-ceramic coating, wherein the glass or the glass-ceramic coating is arranged on a metallic or ceramic substrate, and for repairing defects on the metallic or ceramic substrate surface,
wherein the method comprises the following method steps:
∘ applying enamel powder or enamel slip as a coating material to the at least one defect using a coating method,
∘ removing excess coating material that protrudes,
∘ drying the applied coating material,
∘ baking the applied coating material with the heat input, the method comprising the following steps:
▪ a first focused, high-energy heat input by laser irradiation with an associated melting of the radiation spot,
▪ a second defocused, low-energy heat input with controlled continuous cooling of the radiation spot, wherein the second defocused, low-energy heat input takes place by laser irradiation or inductively.

2. Method according to either claim 1 or claim 2, wherein the method has at least one cycle, wherein individual method steps are applicable multiple times in succession, depending on the defect and the success of the treatment.

3. Method according to any of claims 1 to 3, further comprising a detection of the at least one defect before the application of the coating material and/or a check of the at least one treated defect after the baking of the applied coating material, **characterized in that** the detection and/or check take(s) place by means of an optical and/or electrical test,
∘ the visual test comprising a visual inspection, and
∘ the electrical test comprising a high-voltage test in accordance with DIN EN 14430 or a low-voltage test in accordance with DIN EN ISO 8289.

4. Method according to any of claims 1 to 4, further comprising a mechanical and/or chemical and/or thermal pretreatment of the at least one defect.

5. Method according to any of claims 1 to 5, **characterized in that** the laser irradiation is carried out by a pulsed solid-state laser in the near infrared range from 780 nm to 3 µm, the solid-state laser being designed as an Nd:YAG laser with pulse durations between 9 ns and 250 ns and a laser power of 5 W to 200 W.

6. Method according to any of claims 1 to 6, **characterized in that** the heat input takes place through a laser repair system, the laser repair system being placed on the glass or the glass-ceramic coating before the coating material is applied and removed from the glass or the glass-ceramic coating after the baking.

7. Method according to any of claims 1 to 7, **characterized in that** the coating material has the same properties as the glass with the at least one defect or the glass-ceramic coating and is designed as an enamel slip or enamel powder with grain sizes of 0.35 to 160 µm.

8. Method according to any of claims 1 to 8, **characterized in that** the coating method is selected from a spraying method, a brushing method, a squeegee method, a casting method, a flooding method, a dipping method, a screen-printing method, and/or a spraying process.

9. Laser repair system for repairing defects according to any of claims 1 to 8, comprising at least one exchangeable pivoting device, an exchangeable heat irradiation device, and an energy supply unit, **characterized in that**
∘ the laser repair system is detachably arranged on the glass or the glass-ceramic coating,
∘ the heat irradiation device is movably and detachably arranged on the pivoting device,
∘ the heat irradiation device comprises at least one exchangeable laser machining head and at least one exchangeable laser,
the pivoting device has at least two positions for positioning the heat irradiation device, a first position corresponding to a rest position and a second position corresponding to a machining position on top of the defect, wherein the pivoting device has at least two pivoting arms on which a platform is arranged, the heat irradiation device being mounted on the platform and the platform being designed to be movable by the pivoting arms in the xy direction along the horizontal dimension relative to the enameled object between the first and the second position and wherein the laser repair system is detachably arranged on the glass or the glass-ceramic coating by at least one fastening means attached to the underside of the pivoting device, the underside of the pivoting device pointing towards the glass or the glass-ceramic coating.

10. Laser repair system according to any of claims 9, further comprising a coating system and/or a pretreatment device and/or a detection system.

11. Laser repair system according to any of claims 9 or 10, **characterized in that**, during the application of the coating material to the at least one defect and/or the removal of protruding excess coating material and/or the drying of the coating material and/or the detection and/or check and/or the pretreatment by a laser, the laser machining head is aligned in the first position of the pivoting device and, during the baking of the applied coating material with the heat input and/or the thermal pretreatment, is aligned in the second position of the pivoting device.

12. Use of a method for repairing defects according to any of claims 1 to 8 and of a laser repair system according to any of claims 9 to 11 for repairing defects in containers or storage facilities, cladding of rooms, pipes, signs, industrial parts, consumer goods, cooking vessels, apparatuses, and panels in tunnels or subways.

## Revendications

1. Procédé pour la réparation d'au moins un défaut dans un verre ou un revêtement vitrocéramique, le verre ou le revêtement vitrocéramique étant disposé sur un substrat métallique ou céramique, ainsi que pour la réparation de défauts sur la surface de substrat céramique,
le procédé comprenant les étapes de procédé suivantes :
- application de poudre d'émail ou de barbotine d'émail en tant que matériau d'enduction sur l'au moins un défaut par un procédé d'enduction,
- élimination de matériau d'enduction dépassant en excès,
- séchage du matériau d'enduction appliqué,
- calcination du matériau d'enduction appliqué avec apport de chaleur, comprenant les étapes suivantes :
▪ un premier apport de chaleur focalisé à haute énergie par rayonnement au laser avec une fusion associée de la tache de rayonnement,
▪ un second apport de chaleur défocalisé à basse énergie avec un refroidissement continu contrôlé de la tache de rayonnement, le second apport de chaleur défocalisé à basse énergie ayant lieu par rayonnement au laser ou par induction.

2. Procédé selon la revendication 1, le procédé présentant au moins un passage, les différentes étapes de procédé étant applicables de manière répétable plusieurs fois les unes après les autres en fonction du défaut et du résultat du traitement.

3. Procédé selon l'une des revendications 1 à 2, comprenant en outre une détection de l'au moins un défaut avant l'application du matériau d'enduction et/ou un contrôle de l'au moins un défaut traité après la calcination du matériau d'enduction appliqué, **caractérisé en ce que** la détection et/ou le contrôle ont lieu au moyen d'un test optique et/ou électrique,
- le test optique comprenant un examen visuel, et
- le test électrique comprenant un test à haute tension selon la norme DIN EN 14430 ou un test à basse tension selon la norme DIN EN ISO 8289.

4. Procédé selon l'une des revendications 1 à 3, comprenant en outre un prétraitement mécanique et/ou chimique et/ou thermique de l'au moins un défaut.

5. Procédé selon l'une des revendications 1 à 4, **caractérisé en ce que** le rayonnement au laser a lieu par un laser à solide pulsé dans la plage du proche infrarouge de 780 nm à 3 µm, le laser à solide étant conçu comme un laser Nd:YAG comportant des durées d'impulsion entre 9 ns à 250 ns et une puissance laser de 5 W à 200 W.

6. Procédé selon l'une des revendications 1 à 5, **caractérisé en ce que** l'apport de chaleur a lieu par un système de réparation au laser, le système de réparation au laser étant placé avant l'application du matériau d'enduction sur le verre ou le revêtement vitrocéramique et enlevé après la calcination du verre ou du revêtement vitrocéramique.

7. Procédé selon l'une des revendications 1 à 6, **caractérisé en ce que** le matériau d'enduction présente les mêmes propriétés que celles du verre ou du revêtement vitrocéramique présentant l'au moins un défaut et est conçu comme une barbotine d'émail ou une poudre d'émail avec des grosseurs de grains de 0,35 à 160 µm.

8. Procédé selon l'une des revendications 1 à 7, **caractérisé en ce que** le procédé d'enduction est choisi parmi un procédé d'injection, un procédé de couchage, un procédé de raclage, un procédé de coulée, un procédé d'immersion, un procédé de trempage, un procédé de sérigraphie et/ou un procédé de pulvérisation.

9. Système de réparation au laser pour la réparation de défauts selon l'une des revendications 1 à 8, comprenant au moins un dispositif de pivotement interchangeable, un dispositif de rayonnement de chaleur interchangeable et une unité d'alimentation en énergie, **caractérisé en ce que**
- le système de réparation au laser est disposé de manière amovible sur le verre ou le revêtement vitrocéramique,
- le dispositif de rayonnement de chaleur est conçu mobile et amovible et est disposé au niveau du dispositif de pivotement,
- le dispositif de rayonnement de chaleur comprend au moins une tête de traitement au laser interchangeable et au moins un laser interchangeable,
- le dispositif de pivotement présente au moins deux positions pour un positionnement du dispositif de rayonnement de chaleur, une première position correspondant à une position de repos et une seconde position correspondant à une position de traitement au-dessus du défaut, le dispositif de pivotement présentant au moins deux bras pivotants, sur lesquels est disposée une plateforme, le dispositif de rayonnement de chaleur étant monté sur la plateforme et la plateforme étant conçue de manière à pouvoir être déplacée par rapport à l'objet émaillé par les bras pivotants entre la première et la seconde position dans une direction xy le long de la dimension horizontale, et le système de réparation au laser étant disposé de manière amovible sur le verre ou le revêtement vitrocéramique par au moins un moyen de fixation placé au niveau de la face inférieure du dispositif de pivotement, la face inférieure du dispositif de pivotement étant orientée vers le verre ou vers le revêtement vitrocéramique.

10. Système de réparation au laser selon la revendication 9, comprenant en outre un système d'enduction et/ou un appareil de prétraitement et/ou un système de détection.

11. Système de réparation au laser selon l'une des revendications 9 ou 10, **caractérisé en ce que** la tête de traitement au laser, pendant l'application du matériau d'enduction sur l'au moins un défaut et/ou l'élimination de matériau d'enduction dépassant en excès et/ou le séchage du matériau d'enduction et/ou la détection et/ou le contrôle et/ou le prétraitement par un laser, est dirigée dans la première position du dispositif de pivotement et, pendant la calcination du matériau d'enduction appliqué avec apport de chaleur et/ou le prétraitement thermique, est dirigée dans la seconde position du dispositif de pivotement.

12. Utilisation d'un procédé pour la réparation de défauts selon l'une des revendications 1 à 8 ainsi que d'un système de réparation au laser selon l'une des revendications 9 à 11 pour la réparation de défauts dans des conteneurs ou des réservoirs, des habillages d'espaces, des tuyaux, des enseignes, des pièces industrielles, des biens de consommation, des récipients de cuisson, des appareils ainsi que des panneaux dans des tunnels ou des métros.
